# EUROPÄISCHE PATENTSCHRIFT

(11) **EP 1 736 373 B1**
(45) Veröffentlichungstag und Bekanntmachung des Hinweises auf die Patenterteilung: **27.05.2009**
(21) Anmeldenummer: 06012844.4
(22) Anmeldetag: 21.06.2006
(51) Int. Cl.: B60R 21/13

(54) **Überrollschutzsystem für ein Kraftfahrzeug**
Roll-over protective system for a motor vehicle
Système de protection pour le capotage d'un véhicule automobile

(30) Priorität: 23.06.2005 DE 102005029253
(43) Veröffentlichungstag der Anmeldung: 27.12.2006
(73) Patentinhaber: Wilhelm Karmann GmbH, 49084 Osnabrück (DE)
(72) Erfinder: Kasubke, Wolfgang, 49124 Georgsmarienhütte (DE)

(56) Entgegenhaltungen:
- EP-A- 1 623 882
- DE-A1- 10 160 715
- DE-A1- 10 261 897
- DE-A1- 10 357 053
- DE-A1- 19 501 584
- DE-C1- 19 838 989

## Beschreibung

Die Erfindung betrifft ein Cabriolet-Fahrzeug mit einem Überrollschutzsystem nach der im Oberbegriff des Patentanspruches 1 näher definierten Art.

Bei Personenkraftwagen, wie auch bei Traktoren, ist es bekannt, zur Schaffung eines Überlebensraumes für Insassen im Falle eines Fahrzeugüberschlags Überrollschutzsysteme bereitzustellen, welche einen Überrollkörper, wie z. B. einen Überrollbügel aufweisen, welcher einem einzelnen Fahrzeugsitz oder mehreren Fahrzeugsitzen zugeordnet ist und der in seiner Ruhelage in einer fahrzeugfesten Kassette verborgen ist, aus der er bei Erkennen einer Verunfallung des Fahrzeugs schlagartig in eine obere Stützlage verlagerbar und in dieser Stützlage verriegelbar ist.

In der Praxis allgemein verwendete Überrollbügel bestehen typischerweise aus einem U-förmigen Bügel, dessen rohrförmige Schenkel in Standrohren eines fahrzeugfesten Moduls vertikal geführt sind. Im Inneren jedes Schenkels ist eine Spiralfeder angeordnet, welche durch eine Haltevorrichtung unter Vorspannung gehalten wird, die in Abhängigkeit eines Crash-Signals der Fahrzeugsensorik lösbar ist, wodurch der Überrollbügel unter der Wirkung der Feder in Zehntelsekunden ausgefahren und in seiner Stützlage durch eine geeignet Verriegelungsvorrichtung arretiert wird. Die beiden rohrförmigen Schenkel sind dabei durch ein Querjoch miteinander verbunden, über das meist ein gepolstertes Prallelement geschoben ist.

In der DE 195 40 819 C2 und der DE 197 12 955 A1 sind Beispiele für einen sich über die gesamte Fahrzeugbreite erstreckenden, im Crash-Fall ausfahr- oder ausschwenkbaren Überrollbügel beschrieben.

Problematisch ist bei solchen, die gesamte Fahrzeugbreite überspannenden Überrollbügeln mit einer Zwangsführung ihrer Schenkel auf der jeweiligen Fahrzeugseite, dass häufig ein so genannter Schubladeneffekt zu beobachten ist, worunter ein Verkanten oder Verklemmen des Überrollbügels bei dessen Aktivierung aufgrund von Fertigungstoleranzen oder mangelnder Synchronisation der an den Bügelschenkeln angreifenden Antriebe verstanden wird.

Als Beispiel für eine nur einem Fahrzeugsitz zugeordnete Überrollschutz-Vorrichtung mit einem Überrollkörper, welcher unabhängig von einem einem anderen Fahrzeugsitz zugeordneten Überrollkörper ausfahrbar ist, wird exemplarisch auf die DE 198 38 989 C1 verwiesen. Darin ist eine einem jeden Fahrzeugsitz zugeordnete Überrollschutz-Vorrichtung offenbart, bestehend aus einer fahrzeugfest angeordneten Kassette, einem in der Kassette ausfahrbar in Führungen gehaltenen und geführtem Überrollkörper in Form eines sich über die gesamte Kassettenbreite erstreckenden Profilbügelkörpers, einer Verriegelungsvorrichtung zur Selbstverriegelung der Ausfahrbewegung und einem Federantriebssystem zum Ausfahren des Profil-Bügelkörpers und mit einer mechanischen Haltevorrichtung zum Halten des Überrollkörpers in einem Ruhezustand und gegen der Vorspannkraft einer Druckfeder des Federantriebssystems.

Die Bereitstellung einer solchen Überrollschutz-Vorrichtung für jeden Fahrzeugsitz bedingt nachteilhafterweise eine hohe Bauteilanzahl und ein insgesamt hohes Gewicht für das gesamte Überrollschutzsystem.

Die vorbeschriebenen Überrollschutzsysteme, wie auch aus der Praxis bekannte Überrollschutz-Vorrichtungen, weisen zudem den Nachteil auf, dass eine Durchlademöglichkeit zwischen den an die Überrollschutz-Vorrichtung angrenzenden Fahrzeugräumen aufgrund der beidseitigen Antriebe des Überrollbügels und dessen Führungseinrichtungen häufig nur sehr begrenzt ist. So erlauben die in der Regel mittig zu einem Fahrzeugsitz angeordneten Überrollschutz-Vorrichtungen keine oder nur klein dimensionierte Durchladen zwischen einem Insassenraum und einem fahrzeugheckseitigen Stauraum, da für die Durchlade nur der geringe Abstandsbereich zwischen den Überrollschutz-Vorrichtungen der jeweiligen Sitze zur Verfügung steht.

Noch begrenzter sind die Möglichkeiten zur Realisierung einer Durchlade bei Überrollschutz-Vorrichtungen, welche als eine vorgefertigte Baueinheit an einer karosseriefesten Aufnahme befestigt werden, beispielsweise an einer hinter Fahrzeugsitzen angeordneten Fahrzeugquerwand.

Eine solche hinsichtlich der Fertigung vorteilhafte Ausgestaltung einer Überrollschutz-Vorrichtung ist beispielsweise in der DE 195 01 584 C2, der DE 43 14 538 C3 und der EP 1 084 914 A2 beschrieben.

Im Übrigen ist es aus der DE 195 01 522 A1 bekannt, in den beiden hinteren Seitenwandbereichen der Fahrzeugkarosserie jeweils ein Stützelement anzuordnen, das in seiner Ruhestellung versenkt im Fahrzeugseitenwandbereich angeordnet und im Gefahrenfall selbsttätig in eine Wirkstellung bewegbar ist.

Weiterhin ist es aus der DE 103 57 053 A1 bekannt, ausfahrbare Überrollbügel in einer Fahrer- und Beifahrertür anzuordnen.

Es ist Aufgabe der vorliegenden Erfindung, ein Cabriolet-Fahrzeug mit einem Überrollschutzsystem der eingangs genannten Art zu schaffen, das sich durch eine hohe Funktionssicherheit im Crash-Fall sowie durch eine großzügige Durchlademöglichkeit auszeichnet.

Diese Aufgabe wird mit einem ein Überrollschutzsystem aufweisenden Cabriolet gemäß den Merkmalen des Patentanspruches 1 gelöst.

Es ist somit ein Cabriolet-Fahrzeug mit einem Überrollschutzsystem mit wenigstens einer einem Fahrzeugsitz zugeordneten Überrollschutzvorrichtung vorgesehen, welches jeweils ein karosseriefestes erstes Modul mit Führungseinrichtungen für ein zwischen einer abgesenkten Ruhelage und einer erhöhten Stützlage verfahrbares zweites Modul mit einem Überrollkörper, welcher eine Prallfläche zur Kontaktierung eines Untergrundes bei einem Fahrzeugüberschlag aufweist, aufweist, wobei eine lösbare Halteeinrichtung zum Halten des zweiten Moduls in seiner Ruhelage, eine Verriegelungsvorrichtung zum Abstützen des zweiten Moduls in einer von seiner Ruhelage abweichenden Position und ein Antriebssystem mit einem Federkraftspeicher, mittels dem das zweite Modul in seiner Ruheposition vorgespannt und im Bedarfsfall in Richtung seiner Stützlage verlagerbar ist, vorgesehen sind.

Erfindungsgemäß weisen die Überrollschutz-Vorrichtungen zweier Fahrzeugsitze einer Sitzreihe unmittelbar am oder im Fahrzeugsitz angeordnete Überrollkörper auf, die mit ihren zugehörigen Modulen jeweils in entgegengesetzter Richtung im Wesentlichen außermittig zu dem zugeordneten Fahrzeugsitz und eine Durchlademöglichkeit im Bereich einer Fahrzeugquerversteifung bildend beabstandet zueinander angeordnet sind.

Eine außermittige Anordnung der Überrollschutz-Vorrichtungen, das heißt, dass deren Komponenten überwiegend im Bereich einer einer Fahrzeugseite zugewandten Seite des betreffenden Fahrzeugsitzes angeordnet sind, ermöglicht vorteilhafterweise die Anordnung einer großzügige Durchladeöffnung zwischen den Fahrzeugsitzen.

In einer vorteilhaften Ausgestaltung ist erfindungsgemäß bei einem solchen Überrollschutzsystem der Überrollkörper stangenartig ausgeführt, wobei er in seinem Inneren einen axialen Aufnahmekanal für den Federkraftspeicher aufweist. Dabei weist das erste Modul als Führungseinrichtungen des Überrollkörpers ein Rohrprofil auf, in dem in Ruhelage des Überrollkörpers wenigstens ein oberer Endbereich und in Stützlage ein unterer Endbereich des Überrollkörpers aufgenommen sind.

Das Cabriolet-Fahrzeug nach der Erfindung weist somit für jeden Fahrzeugsitz eine Überrollschutz-Vorrichtung auf, welche unabhängig von der Überrollschutz-Vorrichtung eines anderen Sitzes angetrieben wird, so dass eine Verkantung des ausfahrbaren Moduls bei dessen Ausfahrbewegung und somit eine Beeinträchtigung der Funktionssicherheit oder gegebenenfalls zusätzliche erforderliche Synchronisationseinrichtungen vermieden werden können.

Die stangenartige Ausgestaltung des Überrollkörpers mit einem axialen Aufnahmekanal für den Federkraftspeicher hat den Vorteil, dass der Federkraftspeicher, welcher zur Verlagerung des Überrollkörpers erforderlich ist, in den Überrollkörper integriert sein kann, wobei durch die Formgebung der Innenkontur des Überrollkörpers entsprechend der Form des Federdruckspeichers auf eine zusätzliche Federführung verzichtet werden kann.

Der Federkraftspeicher kann dabei als eine Druckfeder ausgebildet sein, welche an dem karosseriefesten ersten Modul und dem Überrollkörper abgestützt ist. Abweichend hiervon kann jedoch auch eine Zugfeder vorgesehen sein, welche beispielsweise zwischen einer sich bis in das Innere des Überrollköpers koaxial hierzu erstreckenden Stange und dem durch die lösbare Halteeinrichtung gehaltenen Überrollkörper derart vorgespannt eingebaut ist, dass der Überrollkörper nach einer Freigabe durch die lösbare Halteeinrichtung auf Grund der Zugkraft der Feder in eine obere Stützlage überführt wird.

Bei einer Ausführung ohne jegliche Führungsstange kann eine solche Zugfeder auch an einem karosseriefesten Bolzen, welcher sich beispielsweise durch einen Längsschlitz in das Innere des Überrollbügels erstreckt, gehalten sein, so dass der Federkraftspeicher ohne weitere Führung vollständig durch den Überrollkörper geführt ist.

Eine vollständige Führung des Federkraftspeichers durch den Überrollkörper ist auch bei einer Druckfeder möglich, welche zwischen einem an dem Überrollkörper ausgebildeten Anschlag und einem sich durch eine Ausnehmung in den Überrollkörper erstreckenden karosseriefesten Anschlag, welcher beispielsweise als Bolzen mit einem Federteller ausgebildet sein kann, unter Druckspannung stehend eingebaut ist.

Hiermit und indem das erste Modul als Führungseinrichtung des Überrollkörpers ein Rohrprofil aufweist, welches in Ruhelage des Überrollkörpers wenigstens dessen oberen Endbereich und in Stützlage dessen unteren Bereich aufnimmt, wird eine schlanke und kompakte Bauweise der jeweiligen Überrollschutz-Vorrichtung erzielt, welche ggf. zusammen mit der außermittigen Anordnung der Überrollschutz-Vorrichtungen beispielsweise hinter den Fondsitzen eine große Durchlademöglichkeit für sperrige Güter zwischen einem Fahrzeuginnenraum und einem heckseitigen Aufnahmeraum bietet.

Zur weiteren Bauraum- und Gewichtsreduzierung kann bei einer vorteilhaften Ausführung der Erfindung vorgesehen sein, dass das eine Führungseinrichtung des Überrollkörpers bildende Rohrprofil mit seinem unteren Rand gegenüber einem Fußelement des ersten Moduls beabstandet angeordnet ist.

Zur Verbindung des Rohrprofils mit dem Fußelement des ersten Moduls kann dabei ein seitlich des Rohrprofils befestigtes Verbindungsprofil, welches beispielsweise ein U-Profil oder ein Kastenprofil sein kann, vorgesehen sein.

Die Führungseinrichtungen des fahrzeugfesten ersten Moduls können genauso wie die Bauelemente des ausfahrbaren Moduls, insbesondere der Überrollkörper, aus kostengünstigen Strangpressprofilen hergestellt sein.

Dabei kann z. B. das als Führungseinrichtung dienende Rohrprofil in einfacher Weise mit weiteren Funktionselementen kombiniert werden, wie z. B. mit einer Rasteinrichtung der Verriegelungseinrichtung, welche an dem Rohrprofil abgestützt sein kann.

Bei einer sehr kostengünstigen Ausführung kann das Rohrprofil z. B. eine umfangsseitige Ausnehmung zur Aufnahme der hieran abgestützten Rasteinrichtung der Verriegelungseinrichtung aufweisen, wobei die Rasteinrichtung in Bewegungsrichtung des Überrollkörpers formschlüssig an dem Rohrprofil gehalten ist und nicht weiter mit dem Rohrprofil verbunden ist.

Die in Kompaktbauweise und außermittig hinter den Fahrzeugsitzen positionierbaren Überrollschutz-Vorrichtungen können in einer vorteilhaften Ausgestaltung funktionsfähig vormontierte Baugruppen bilden, die an dem Fahrzeugaufbau festlegbar sind.

Die so gebildete Bauteilgruppe aus erstem Modul, zweitem Modul, Halteeinrichtung, Verriegelungsvorrichtung und Antriebssystem kann in einem einzigen Montageschritt in die vorgesehene Fahrzeugkarosserie eingesetzt werden und muss dann nur noch an den Kabelbaum im Fahrzeug angeschlossen werden. Dabei können auch Auslösesensoren für die Überrollschutz-Vorrichtungen in die jeweilige Bauteilgruppe integriert sein.

Die Befestigung der Überrollschutz-Vorrichtungen an dem Fahrzeugaufbau kann beispielsweise mittels Verschraubung an einer vertikal stehenden Fahrzeugquerwand hinter den Sitzen erfolgen oder aber an Aufnahmen an der Fahrzeugseite, wenn die Bauteilgruppe mit dem erfindungsgemäßen Überrollschutzsystem gleichzeitig die Fahrzeugquerwand bildet.

In einer einfachen Ausgestaltung kann die Versteifung in Fahrzeugquerrichtung durch einen einfachen, die Überrollschutz-Vorrichtungen oberhalb einer Durchladeöffnung verbindenden Querträger realisiert werden.

Bei einer besonders kompakten Ausführung des erfindungsgemäßen Überrollschutzsystems kann in das erste, karosseriefeste Modul ein Rückhaltegurtsystem mit Sicherheitsgurtführungen für wenigstens einen Sicherheitsgurt integriert sein.

Die Komponenten eines Sicherheitsgurtsystems, wie z. B. ein Gurtaufroller und eine obere Sicherheitsgurtführung, können über entsprechende Aufnahmen, welche ohne besonderen Aufwand bei der Herstellung der Profile des ersten Moduls vorgesehen werden können, problemlos in die fahrzeugfesten Bauteile des Überrollschutzsystems integriert werden.

Das Rückhaltegurtsystem kann dabei nicht nur Sicherheitsgurte zum Angurten von erwachsenen Personen umfassen, sondern auch Kindersitzhaltegurte, wobei bei einer besonders vorteilhaften Ausführung auch ein oberer Verankerungspunkt für einen Kindersitzhaltegurt, welcher auch als Toptether-Befestigung bezeichnet wird, an einem fahrzeugfesten Bauteil des Überrollschutzsystems angeordnet ist.

Das erfindungsgemäße Überrollschutzsystem kann bei einer besonders vorteilhaften Ausführung zusammen mit den Überrollschutz-Vorrichtungen und gegebenenfalls einer Durchladeöffnung und einem fahrzeugversteifenden Querträger als vollständig vormontierte Baugruppe ausgebildet sein, so dass diese mulifunktionale Baugruppe als ein einziges vorkonfiguriertes Modul beim Fahrzeugbau in die Karosserie eingesetzt und hieran beispielsweise durch Schraubverbindungen befestigt werden kann.

Eine solche separat komplettierte Baugruppe, die bei der Endmontage in das Fahrzeug eingesetzt wird, kann zusätzlich auch Sitzkomponenten, wie z. B. ein oberes und unteres Sitzlehnenlager, umfassen.

Die lösbare Halteeinrichtung zum Halten des zweiten Moduls mit dem Überrollkörper in seiner Ruheposition kann bei einer vorteilhaften Ausführung ein um eine feste Drehachse schwenkbar gelagertes Verriegelungselement umfassen, welches scheibenartig ausgebildet ist und welches neben einem Klinkenabschnitt eine umfangsseitige Ausnehmung, in die ein Sperrglied eines Aktuators in Ruheposition eingreift, und einen umfangsseitigen Anschlag, an dem das zur Überführung des zweiten Moduls in dessen Stützposition durch den Aktuator aus der Ausnehmung zurückgenommene Sperrglied nach einer den Klinkenabschnitt aus Eingriff mit dem Verriegelungs-Gegenkörper bringenden Rotation des Verriegelungselementes anliegt, aufweist.

Eine solche Ausgestaltung der lösbaren Halteeinrichtung und der hiermit ausgestatteten Überrollschutz-Vorrichtung ermöglicht eine sichere und kostengünstige Verriegelung des Überrollkörpers in seiner Ruheposition, wobei die Halteeinrichtung vorteilhafterweise mit wenigen ohne großen Präzisionsaufwand zu fertigenden Bauteilen realisiert werden kann. Das scheibenartige Verriegelungselement ersetzt dabei die Hebel eines bekannten Doppelhebelsystems und kann ohne Federeinrichtung gegenüber dem Sperrglied des Aktuators gelagert werden.

In einfacher Ausgestaltung kann es vorgesehen sein, dass das Sperrglied durch den Aktuator in Axialrichtung linear bewegbar ist, womit eine Ausgestaltung des Aktuators z. B. als elektromagnetischer oder piezoelektrischer Aktuator, welcher das Sperrglied in dessen Axialrichtung zur Auslösung des Überrollkörpers zurückzieht, möglich ist. Das Sperrglied kann dabei ein mittels einer Feder entgegen dem Verriegelungselement vorgespannter Stift oder ein Blechelement einfacher Bauart sein.

In einer vorteilhaften Ausgestaltung der Erfindung wird die Drehachse des Verriegelungselements durch einen Bolzen gebildet, welcher an gegenüberliegenden Seiten eines Grundkörpers gelagert ist, wobei die Seiten des Grundkörpers durch eine Traverse miteinander verbunden sind, welche einen Sitz für den Aktuator bildet. Der Grundkörper stellt somit eine Art Käfig für die lösbare Halteeinrichtung dar, mit dem die Halteeinrichtung an beliebigen karosseriefesten Bauelementen des Überrollschutzsystems angeordnet werden kann.

In einer besonders einfachen Ausgestaltung kann der Grundkörper im Wesentlichen als ein U-Profil ausgebildet sein, wobei die Seitenschenkel des U-Profils die Seiten des Grundkörpers bilden.

Eine weitere vorteilhafte Ausführung des erfindungsgemäßen Überrollschutzsystems sieht vor, dass das schwenkbare Verriegelungselement, welches mit einem Verriegelungselement-Gegenkörper des zweiten Moduls in Ruheposition des Überrollkörpers in Eingriff steht und im Crash-Fall den Überrollkörper zur Überführung in dessen Stützposition freigibt, in Ruheposition durch einen im Crash-Fall aufschmelzbaren Schmelzeinsatz des Aktuators gehalten ist.

Die Verwendung eines Schmelzeinsatzes zum Halten des Verriegelungselementes und zum Aufheben der Verriegelungsstellung im Crash-Fall gewährleistet auf einfache und kostengünstige Art und Weise eine zuverlässige und schnelle Auslösung des Überrollkörpers.

Wenn nur das schwenkbar gelagerte und in Ruheposition des Überrollkörpers in Eingriff mit dem Verriegelungselement-Gegenkörper stehende Verriegelungselement durch den Schmelzeinsatz gehalten werden muss, kann der Schmelzeinsatz auf wesentlich niedrigere Kräfte ausgelegt sein, als er zum direkten Halten des zweiten Moduls bzw. des Überrollkörpers ausgelegt sein müsste. Die entsprechend reduzierte Dimensionierung des Schmelzeinsatzes ermöglicht wiederum ein schnelles Aufschmelzen und damit Durchtrennen der hiermit verbundenen Bauteile, womit die Auslösung des Überrollkörpers in sehr kurzer Zeit erfolgen kann.

Der Schmelzeinsatz kann prinzipiell eine beliebige Form haben und z. B. plattenförmig oder stab- bzw. drahtförmig ausgebildet sein.

Auch das schwenkbare Verriegelungselement kann bei der Halteeinrichtung des erfindungsgemäßen Überrollschutzsystems grundsätzlich in beliebiger Form ausgestaltet sein.

In einer vorteilhaften Ausgestaltung der Erfindung kann zwischen dem Verriegelungselement und dem Aktuator ein Sperrglied angeordnet sein, welches das Verriegelungselement in einer den Überrollkörper haltenden Sperrstellung hält oder freigibt. Dabei kann es vorgesehen sein, dass das Sperrglied in Sperrstellung gegen einen Sitz, welcher durch den aufschmelzbaren Schmelzeinsatz des Aktuators gehalten ist, mittels eines Energiespeichers vorgespannt ist. Bei einem erkannten Crash kann der Sitz des Sperrglieds durch ein Aufschmelzen des Schmelzeinsatzes z. B. durch Anlegen einer speziell abgestimmten Stromspannung blitzartig aufgehoben werden, so dass das vorgespannte Sperrglied in Richtung des aufgehobenen Sitzes entweichen und das Verriegelungselement freigeben kann. Der Energiespeicher kann als eine Feder ausgebildet sein, welche einenends an einem an dem Sperrglied ausgebildeten Federsitz und anderenends an einem gehäuseartigen Grundkörper abgestützt ist.

Um ein Herausfallen des Sperrglieds nach Aufheben des zuvor durch den Schmelzeinsatz gesicherten Sitzes bei einer Entspannung der Feder des Sperrglieds zu vermeiden und um die Reversierbarkeit einer Auslösung der Halteeinrichtung zu erleichtern, kann an dem Grundkörper ein Sperrgliedanschlag zur Begrenzung des Weges des Sperrglieds nach einem Lösen des Sitzes im Crash-Fall in einer dem Verriegelungselement abgewandten Richtung vorgesehen sein.

Der Sitz des Sperrglieds in Sperrstellung kann durch wenigstens zwei schwenkbar gelagerte Backenkörper gebildet sein, welche durch den Schmelzeinsatz miteinander verbunden sind. Die Verbindung zwischen den Backenkörpern wird somit im Crash-Fall aufgehoben, so dass diese durch die Krafteinwirkung des Sperrglieds auseinander geschwenkt werden können.

Eine solche Ausgestaltung mit einem Sperrglied ist in der deutschen Patentanmeldung (Aktenzeichen der Anmelderin: Kk/P-01037/01039 DE, gleicher Anmeldetag) näher beschrieben.

Bei einer Ausführung ohne separates Sperrglied kann das Verriegelungselement gegebenenfalls direkt gegen einen Sitz, welcher durch einen aufschmelzbaren Schmelzeinsatz in Ruhelage des Systems gehalten ist, gedrückt sein. Wenn an dem Verriegelungselement andererseits in Rotationsrichtung die Zugkraft des vorgespannten Überrollkörpers oder eines Vorspannelements angreift, wird durch die Aufhebung des Sitzes in Folge eines Aufschmelzens des Schmelzeinsatzes eine die Halteeinrichtung lösende Rotationsbewegung des Verriegelungselementes ermöglicht.

Bei einer weiteren vorteilhaften Ausführungsform kann das Verriegelungselement in Ruheposition in Rotationsrichtung radial derart mit einem Grundkörper durch einen Schmelzeinsatz verbunden sein, dass es eine Zugkraft gegenüber dem Grundkörper ausübt, wobei der Grundkörper ein Ende des Schmelzeinsatzes und das Verriegelungselement das andere Ende des Schmelzeinsatzes trägt.

In weiterer vorteilhafter Ausgestaltung der Erfindung kann das Verriegelungselement in der Ruhelage auch in einer Anschlagposition gehalten sein, aus der es im Crash-Fall durch einen Aktuator mit einem Pyrotechnischen Treibsatz in einer Rotationsposition überführbar ist.

Die beschriebenen Ausgestaltungen einer lösbaren Halteeinrichtung und der hiermit ausgestatteten Überrollschutz-Vorrichtung gemäß der Erfindung ermöglichen sämtlich eine sichere und kostengünstige Verriegelung des Überrollkörpers in seiner Ruheposition, wobei die Halteeinrichtung vorteilhafterweise mit wenigen ohne großen Präzisionsaufwand zu fertigenden Bauteilen realisiert werden kann.

Die Verriegelungsvorrichtung in einer erfindungsgemäß ausgestalteten Überrollschutz-Vorrichtung kann wenigstens eine erste Rasteinrichtung aufweisen, die zum Abstützen des zweiten Moduls mit einer zweiten Rasteinrichtung in Wirkverbindung bringbar ist und die eine Bewegung des zweiten Moduls ausgehend von seiner Ruhelage in Richtung seiner Stützlage zulässt. Die erste Rasteinrichtung kann dabei eine Sperrklinke mit einem Zahnprofil aufweisen, während die zweite Rasteinrichtung mit einer der Geometrie des Zahnprofils der ersten Rasteinrichtung angepassten Rastleiste ausgebildet ist. Die Sperrklinke ist dabei vorzugsweise in Richtung der Rastleiste angefedert gelagert.

In einer weiteren Ausgestaltung der Erfindung kann die Verriegelungsvorrichtung zum selbsttätigen Verrasten des ausfahrbaren zweiten Moduls in dessen teilweise oder vollständig ausgefahrener Position mit einer ersten und einer zweiten Rasteinrichtung ausgebildet sein, wobei eine der Rasteinrichtungen mit einem der Module verbunden ist und einen exzentrisch um eine Drehachse gelagerten, mit einem Zahnprofil ausgeführten Sperrkörper aufweist und wobei die jeweils andere Rasteinrichtung als eine dem Sperrkörper zugewandte Oberfläche des jeweils anderen Moduls ausgebildet ist, mit der das Zahnprofil in einer Wirkposition des Sperrkörpers, in der eine Bewegung des zweiten Moduls in Richtung seiner Ruhelage verhindert ist, in Reibeingriff steht.

Ein derart ausgestaltetes Überrollschutzsystem hat den Vorteil eines einfachen Aufbaus mit wenigen, ohne hohe Präzisionsanforderungen zu fertigenden Bauteilen, womit im Vergleich zu aus dem Stand der Technik bekannten Überrollschutzsystemen eine kostengünstige Herstellung möglich ist.

So kann die zweite Rasteinrichtung des erfindungsgemäßen Überrollschutzsystems als eine einfache Oberfläche eines Bauteils eines der Module ausgeführt sein, die ohne weitere Fertigungsschritte zur Verfügung steht, wohingegen bei herkömmlichen Überrollschutzsystemen aufwändig herzustellende und mit Zahnprofilen ausgeführte Rasteinrichtungen vorgesehen sind, die mit einem Zahnprofil einer Sperrklinke zum Verriegeln des Überrollschutzsystems in Eingriff gebracht werden müssen.

Weitere Vorteile und vorteilhafte Ausgestaltungen eines Überrollschutzsystems gemäß der Erfindung sind der Beschreibung, der Zeichnung und den Patentansprüchen entnehmbar.

Mehrere Ausführungsbeispiele eines erfindungsgemäß ausgestalteten Überrollschutzsystems eines Cabriolet-Fahrzeugs sind in der Zeichnung schematisch vereinfacht dargestellt und werden in der nachfolgenden Beschreibung näher erläutert, wobei der Übersichtlichkeit halber für bau- und funktionsgleiche Bauteile dieselben Bezugszeichen verwendet werden.

Es zeigt:
- Fig. 1: eine schematisierte Vorderansicht eines Überrollschutzsystems, bei dem jeweils einem Fahrzeugsitz eine Überrollschutz-Vorrichtung zugeordnet ist;
- Fig. 2: eine vereinfachte dreidimensionale Ansicht eines oberen Bereichs einer Überrollschutz-Vorrichtung der Fig. 1 in Alleinstellung;
- Fig. 3: eine ausschnittsweise dreidimensionale Ansicht des in Fig. 2 gezeigten Bereiches der Überrollschutz-Vorrichtung;
- Fig. 4: eine Vorderansicht einer Haltevorrichtung für einen Überrollkörper der Überrollschutz-Vorrichtung der Fig. 2 in einem verriegelten Ruhezustand;
- Fig. 5: eine dreidimensionale Darstellung der Halteeinrichtung der Fig. 4 in Ruheposition des Überrollkörpers;
- Fig. 6: eine teilweise geschnittene Seitenansicht der Halteeinrichtung gemäß Fig. 4 und Fig. 5 nach einer Auslösung und Verlagerung des Überrollkörpers in dessen ausgefahrene Stützposition;
- Fig. 7: eine dreidimensionale Ansicht einer Rasteinrichtung einer Verriegelungsvorrichtung der Überrollschutz-Vorrichtung gemäß Fig. 1 bis Fig. 3 in Alleinstellung;
- Fig. 8: eine dreidimensionale Darstellung einer Überrollschutz-Vorrichtung, welche im Wesentlichen der Ausführung der Überrollschutz-Vorrichtungen gemäß Fig. 1 entspricht, jedoch eine alternative Halteeinrichtung für den Überrollkörper, eine alternative Verriegelungsvorrichtung und ein alternativ gestaltetes Antriebssystem aufweist;
- Fig. 8a: eine Explosionsdarstellung der Überrollschutz-Vorrichtung der Fig. 8;
- Fig. 9: eine vereinfachte und freigestellte, dreidimensionale Darstellung der Halteeinrichtung der Überrollschutz-Vorrichtung gemäß Fig. 8;
- Fig. 10: eine vereinfachte perspektivische Darstellung der Halteeinrichtung der Fig. 9 bei einer Auslösung und Freigabe des Überrollkörpers zur Überführung in dessen Stützposition;
- Fig. 11: eine vereinfachte Vorderansicht der lösbaren Halteeinrichtung gemäß Fig. 9 und Fig. 10 in einer Reversierlage.
- Fig. 12: eine vereinfachte perspektivische Rückansicht der Überrollschutz-Vorrichtung der Fig. 8 im Bereich der lösbaren Halteeinrichtung gemäß Fig. 9 bis Fig. 11;
- Fig. 13: eine Vorderansicht einer dritten, pyrotechnischen Ausführung einer lösbaren Halteeinrichtung für die Überrollschutz-Vorrichtung gemäß Fig. 1 oder Fig. 8 bei einem Ruhezustand des Überrollkörpers;
- Fig. 14: die Halteeinrichtung der Fig. 13 bei einer Auslösung und Freigabe des Überrollkörpers zur Überführung in dessen Stützposition;
- Fig. 15: einen vereinfachten Querschnitt durch die Halteeinrichtung der Fig. 13 und Fig. 14 entlang der Linie A-A in Fig. 14;
- Fig. 16: eine vereinfachte perspektivische Rückansicht der Überrollschutz-Vorrichtung im Bereich der lösbaren Halteeinrichtung gemäß Fig. 13 bis Fig. 15;
- Fig. 17: eine Teilschnittansicht eines Bereichs der Verriegelungsvorrichtung der Überrollschutz-Vorrichtung der Fig. 8;
- Fig. 18: eine dreidimensionale Darstellung einer Rasteinrichtung der Verriegelungsvorrichtung gemäß Fig. 17 in Alleinstellung;
- Fig. 19: eine vereinfachte perspektivische Ansicht der Überrollschutz-Vorrichtung im Bereich der Verriegelungsvorrichtung gemäß Fig. 17 und Fig. 18 bei einem Ruhezustand des Überrollkörpers;
- Fig. 20: eine vereinfachte perspektivische Prinzipdarstellung einer weiteren Ausführung eines erfindungsgemäßen Überrollschutzsystems mit einer integrierten Rückhaltegurtanlage;
- Fig. 21: eine Rückansicht des Überrollschutzsystems der Fig. 20; und
- Fig. 22: eine perspektivische Draufsicht auf einen Bereich des Überrollschutzsystems der Fig. 20 und Fig. 21.

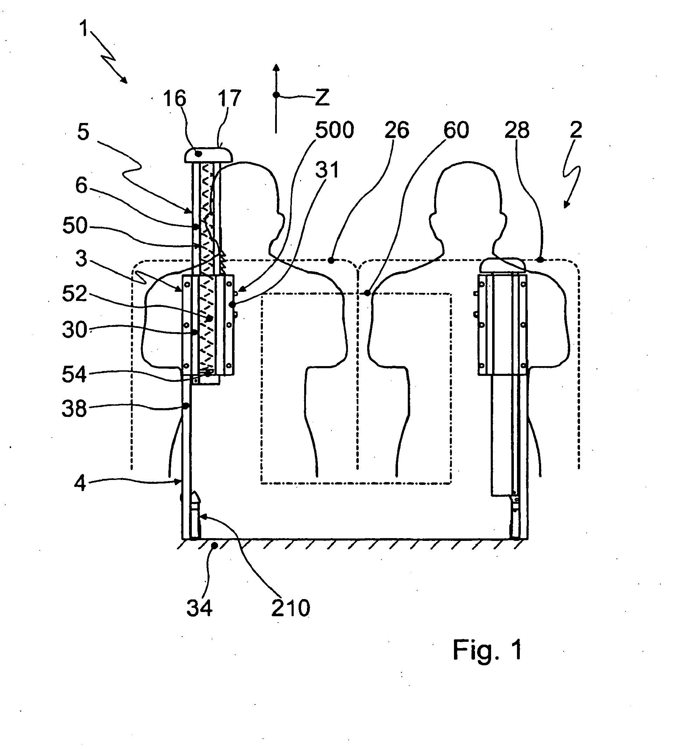

Die Figuren der Zeichnung zeigen in vereinfachter Darstellung ein Überrollschutzsystem 1 eines Cabriolet-Fahrzeugs, von dem zwei im Fond angeordnete Fahrzeugsitze 26, 28 in Fig. 1 schematisch angedeutet sind. Jedem der Fahrzeugsitze 26, 28 ist eine Überrollschutz-Vorrichtung 2 bzw. 3 zugeordnet, welche jeweils ein karosseriefestes erstes Modul 4 und ein zwischen einer abgesenkten Ruhelage und einer erhöhten Stützlage verfahrbares zweites Modul 5 mit einem Überrollkörper 6 aufweisen, wobei das zweite Modul 5 bei einer Verlagerungsbewegung an dem ersten Modul 4 geführt ist.

Des Weiteren weist jede Überrollschutz-Vorrichtung 2, 3 eine lösbare Halteeinrichtung 210, 310 oder 410 zum Halten des zweiten Moduls 5 mit dem Überrollkörper 6 in seiner Ruhelage, eine Verriegelungsvorrichtung 500 bzw. 600, mittels der das zweite Modul 5 in einer von seiner Ruhelage abweichenden Position gegen einen in Richtung der Ruhelage wirkenden Kraftangriff selbsttätig abstützbar ist, und ein Antriebssystem 50 mit einem Federkraftspeicher 52, mittels dem das zweite Modul 5 in seiner Ruheposition vorgespannt und im Bedarfsfall in Richtung seiner Stützlage verlagerbar ist, auf.

Der Überrollkörper 6 ist bei allen gezeigten Ausführungen stangenartig ausgeführt und weist in seinem Inneren einen axialen Aufnahmekanal 8 für den Federkraftspeicher 52 auf.

Der Federkraftspeicher 52 ist in den Figuren teilweise nur symbolisch dargestellt und kann in herkömmlicher Weise als eine Spiraldruckfeder ausgeführt sein.

Bei den gezeigten Ausführungen stellt der Überrollkörper 6 jeweils einen geraden Stangenkörper dar, wenngleich in weiteren Ausführungen gegebenenfalls auch eine Krümmung in seinem oberen Bereich vorgesehen sein kann.

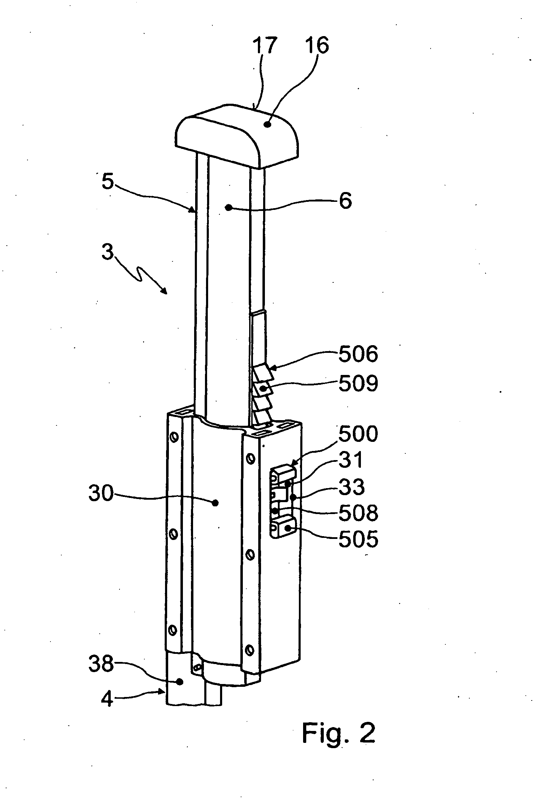

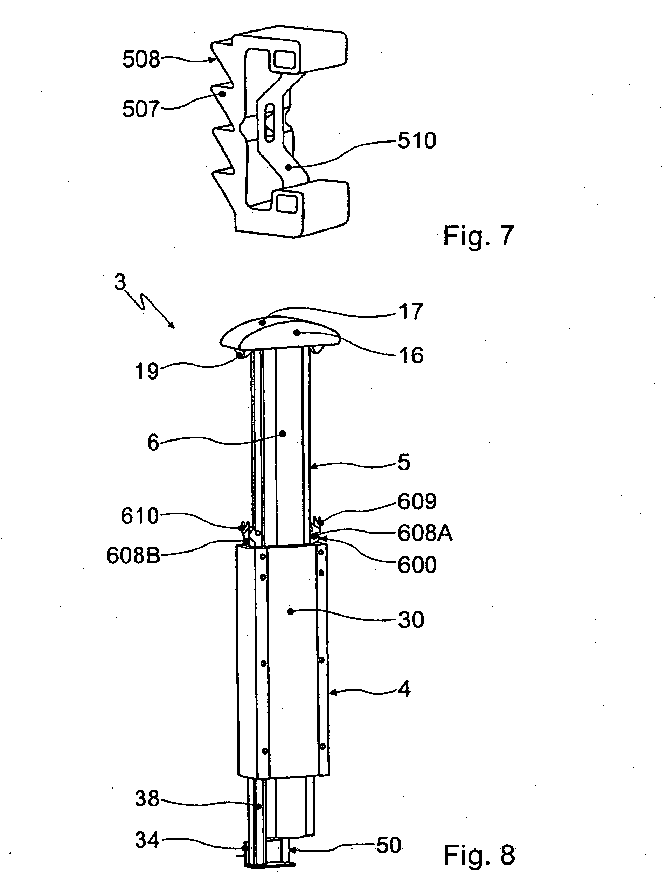

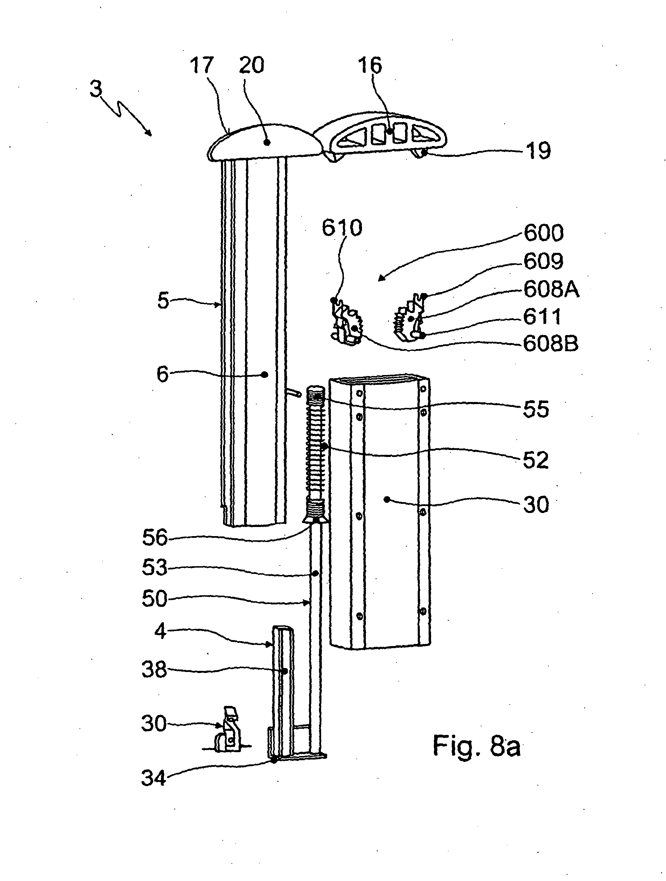

Der Querschnitt des Überrollkörpers 6 ist jeweils im Wesentlichen rund, wobei die innere Querschnittskontur bei der Ausführung nach Fig. 1 und Fig. 2 kreisrund und bei der Ausführung nach Fig. 8 oval ist. An der Außenkontur sind den runden Kernquerschnitt umgebende Abflachungen 7 und Stege 10, 11 bzw. 12, 13 und 14, 15 ausgeformt, wobei die Abflachung 7 und die Stege 11 bis 15 nicht nur der Versteifung, sondern auch einer Verdrehsicherung des Überrollkörpers 6 dienen und teilweise Bestandteil der jeweiligen Verriegelungsvorrichtung 500, 600 des Überrollkörpers 6 sind.

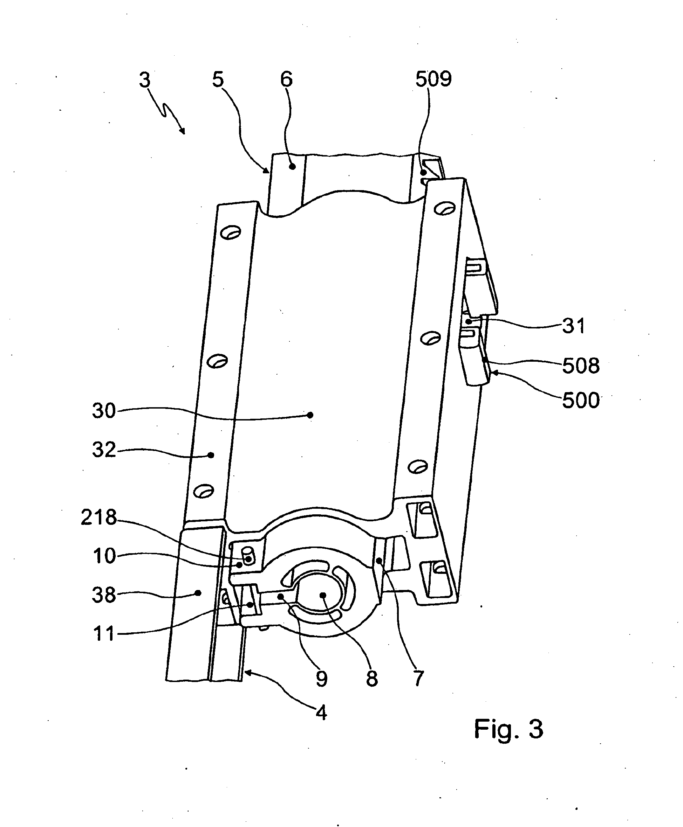

Bei der Ausführung gemäß Fig. 1 ist die nur prinzipmäßig angedeutete, als Federkraftspeicher dienende Druckfeder 52 in dem Aufnahmekanal 8 des Überrollkörpers 6 nicht sichtbar eingefasst und durch einen Sperrbolzen 54, welcher mit einem als Führungseinrichtung dienendem Rohrprofil 30 des fahrzeugfesten ersten Moduls 4 verbunden ist, gesichert. Eine in Fig. 3 ersichtliche sich über die Verschiebestrecke des Überrollkörpers 6 erstreckende, schlitzartige Durchtrittsöffnung 9 für den Sperrbolzen 54 stellt dabei die Verschiebbarkeit des Überrollkörpers 6 sicher.

Hiervon abweichend könnte sich der Aufnahmekanal für den Federkraftspeicher in dem Überrollkörper 6 auch nur über einen kürzeren Längsabschnitt des Überrollkörpers erstrecken und der Federkraftspeicher an einem Fußteil 34 des fahrzeugfesten ersten Moduls 4 abgestützt sein, wie es beispielsweise in der in Fig. 8 gezeigten Ausführung der Fall ist. Es kann somit auch bei der Ausführung nach Fig. 1 bei einer gewünschten zusätzlichen Abstützung des Federdruckspeichers dessen Erstreckung bis zu dem Fußteil 34 des ersten Moduls 4 vorgesehen sein, wobei der Federdruckspeicher gegebenenfalls um eine Führungsstange oder auf einer Stange angeordnet sein kann.

Bei den Ausführungen nach Fig. 1 und Fig. 8 ist das als Führungseinrichtung des Überrollkörpers 6 dienende Rohrprofil 30 mit seinem unteren Rand gegenüber dem Fußelement 34 des ersten Moduls 4 beabstandet angeordnet, wobei das Rohrprofil 30 in Ruhelage des Überrollkörpers 6, welche in Fig. 1 anhand der rechts dargestellten Überrollschutz-Vorrichtung 2 gezeigt ist, einen oberen Endbereich des Überrollkörpers 6 umgreift und in Stützlage des Überrollkörpers 6, welche in Fig. 1 links anhand der Überrollschutz-Vorrichtung 3 gezeigt ist, den unteren Endbereich des Überrollkörpers 6 aufnimmt.

Die Verbindung des Rohrprofils 30 mit dem Fußelement 34 des karosseriefesten Moduls 4 erfolgt bei den gezeigten Ausführungen jeweils über ein Verbindungsprofil 38, welches an der der Fahrzeugseite zugewandten Seite des Rohrprofils 30 in einen korrespondierend geformten Profilabschnitt 30 eingeführt und hiermit verschraubt ist.

Bei den gezeigten Ausführungen ist das Verbindungsprofil 38 wie die übrigen Profile des Überrollschutzsystems 1 als ein Strangpressprofil ausgeführt, wobei vorliegend für das Verbindungsprofil 38 ein U-Querschnitt gewählt ist. Hiervon abweichend kann jedoch auch jede andere Profilform eines offenen oder geschlossenen Profils für das Verbindungsprofil dem vorliegenden Anwendungsfall entsprechend gewählt werden, wobei die Wahl der Geometrie im Hinblick auf eine möglichst schlanke Bauweise der Überrollschutz-Vorrichtung 2 bzw. 3 vorzunehmen ist.

Bei den vorliegenden Ausführungen sind die Überrollschutz-Vorrichtungen 2, 3 zweier Fahrzeugsitze 26, 28 einer Sitzreihe jeweils in entgegengesetzter Richtung im Wesentlichen außermittig zu dem zugeordneten Fahrzeugsitz 26 bzw. 28 angeordnet, so dass zwischen den Überrollschutz-Vorrichtungen 2, 3 ausreichend Platz für eine großzügige Durchladeöffnung 60 gegeben ist, mittels der sperrige Güter von einem heckseitigen Aufnahmeraum bzw. Kofferraum in den Fahrzeuginnenraum geführt werden können.

In Fig. 1 ist die Durchladeöffnung 60 lediglich schematisch dargestellt und kann hinsichtlich ihrer Größe und Geometrie an die jeweils vorliegenden Verhältnisse angepasst sein.

Die Überrollschutz-Vorrichtungen 2, 3 sind jeweils mit einer nicht näher dargestellten, in üblicher Art und Weise ausgeführten Crash-Sensorik des Fahrzeugs verbunden, wobei hierdurch die Halteeinrichtung 210, 310 oder 410 angesteuert wird, mittels der der Überrollkörper 6 entgegen der Kraft des Federkraftspeichers 52 in Ruhelage gehalten wird.

Bei Vorliegen eines Crash-Signals gibt die betreffende Halteeinrichtung 210, 310, 410 den Überrollkörper 6 frei, so dass der Überrollkörper 6 durch die Kraft des Federkraftspeichers 52 in seiner ausgefahrene obere Stützposition verlagert wird, in der er durch die Verriegelungseinrichtung 500 bzw. 600 gegen ein Wiedereinfahren gesichert wird.

Um bei einem Fahrzeugüberschlag die dabei auftretenden Kräfte besser aufnehmen zu können, weist der Überrollkörper 6 an seinem oberen Ende jeweils ein Prallprofil 16 mit einer gegenüber der Querschnittsfläche des Überrollkörpers 6 vergrößerten Prallfläche 17 auf. Dieses Prallprofil, welches ein Einbohren des stangenartigen Überrollkörpers in den jeweils gegebenen Untergrund bei einem Fahrzeugüberschlag verhindert, ist vorliegend, wie insbesondere in Fig. 8a gezeigt ist, als ein Hohlprofil mit mehreren Hohlräumen ausgebildet, welches an seiner dem Karosserieboden abgewandten Oberfläche bzw. Prallfläche eine Krümmung aufweist. An den Seiten ist das Prallprofil 19 jeweils mit Blenden 20 geschlossen.

Um die Ausfahrbewegung des Überrollkörpers 6 zu begrenzen, weist dieser einen in Fig. 3 besonders deutlich ersichtlichen Bolzen 218 als Anschlag auf, welcher bei Erreichen der maximalen Höhenposition des Überrollkörpers 6 vorliegend an einer Unterkante des Rohrprofils 30 anschlägt.

Mit diesem Anschlagbolzen 218 wird der Überrollkörper 6 gleichzeitig im Ruhezustand durch die Halteeinrichtung 210 bei der Ausführung nach Fig. 1 gehalten, so dass durch die darin gezeigte Anordnung der Halteeinrichtung 210 und der Lage des Bolzens 218 ein zusätzlicher Höhenanschlag entfallen kann.

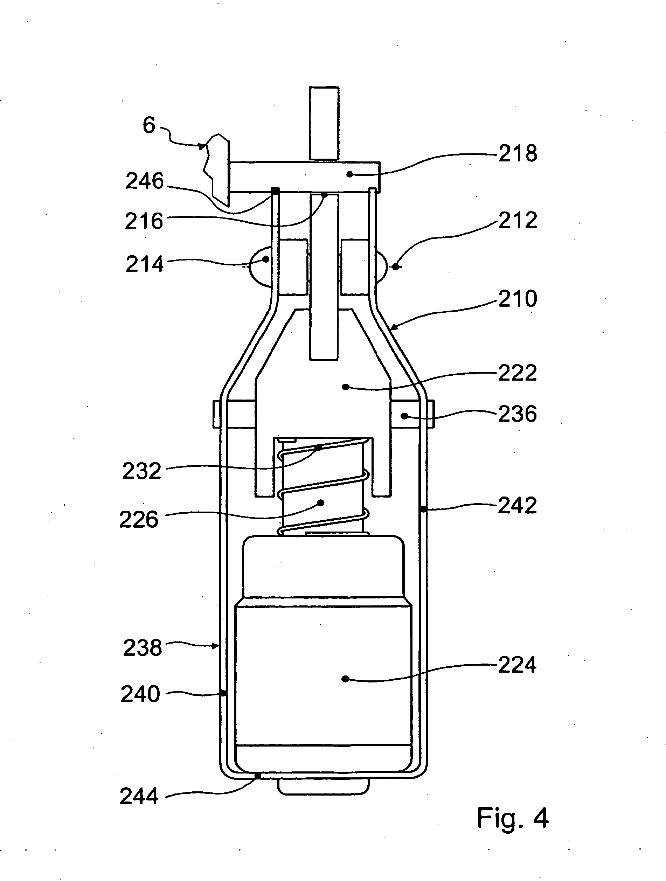

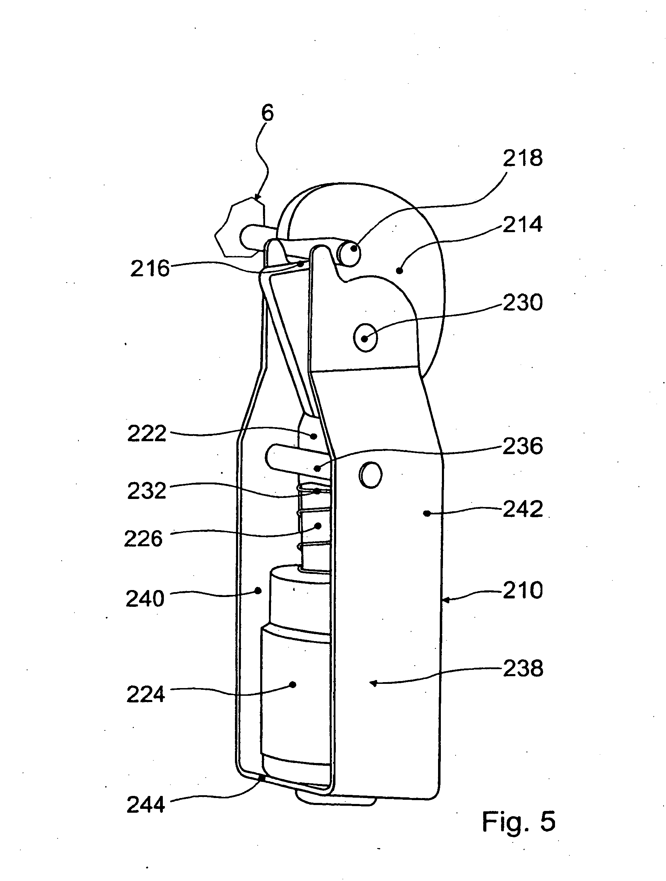

Die Fig. 4, Fig. 5, und Fig. 6 zeigen in vergrößertem Maßstab die bei der Ausführung gemäß Fig. 1 verwendete Halteeinrichtung 210 zum Halten des Überrollkörpers 6 der Überrollschutz-Vorrichtung 3.

Die Halteeinrichtung 210 umfasst ein um eine feste Drehachse 212 schwenkbar gelagertes Verriegelungselement 214, welches im Wesentlichen scheibenartig ausgebildet ist und an seinem Umfang einen Klinkenabschnitt 216 aufweist, welcher bei der gezeigten Ausführung als U-Ausnehmung ausgebildet ist und zum Zusammenwirken mit einem Verriegelungselement-Gegenkörper 218 an dem Überrollkörper 6 ausgelegt ist.

Der Verriegelungselement-Gegenkörper 218 ist bei der gezeigten Ausführung in einfacher Weise als der Bolzen ausgebildet, welcher auch als Höhenanschlag für den Überrollkörper 6 dient. Die Dimensionierung und Formgebung des Bolzens 218 und der U-Ausnehmung des Klinkenabschnitts 216 ist derart aufeinander abgestimmt, dass der Bolzen 218 bei einer Rotation des Verriegelungselements 214 um dessen Drehachse 212 problemlos aus dem Klinkenabschnitt 216 gleiten kann.

In alternativen Ausführungen kann statt des hier vorgesehenen Bolzens auch eine Haltelasche unterhalb einer Ausnehmung an dem Überrollkörper, ein Absatz an dem Überrollkörper oder ein geeignetes Hakenelement als Verriegelungselement-Gegenköper vorgesehen sein.

In der abgesenkten Ruheposition des Überrollkörpers 6 ist das Verriegelungselement 214 durch ein Sperrglied 222, welches mit einem Aktuator 224 zusammenwirkt, gegen eine die Halteeinrichtung 210 lösende Rotation gesichert. Das Sperrglied 222 ist vorliegend als ein auf einem zylindrischen, durch den Aktuator 224 axial beweglichen Kolben befestigtes, flaches, zungenartiges Blechelement ausgebildet.

In Ruheposition des Überrollkörpers 6 greift das Sperrglied 222 in eine umfangsseitige Ausnehmung 228 des scheibenartigen Verriegelungselements 214 ein, womit die Ausnehmung 228 eine Verriegelungsraste bildet, welche vorliegend in Ruheposition des Überrollkörpers 6 koaxial zu einer Längsachse des Sperrgliedes 222 und der Wirkrichtung des Aktuators 224, welche der Bewegungsrichtung des Überrollkörpers 6 entspricht, ausgerichtet ist und sich in Richtung eines die Drehachse 212 des Verriegelungselements 214 bildenden, exzentrisch angeordneten Bolzens 230 im Wesentlichen rechtwinklig zur Ausrichtung der U-förmigen Ausnehmung des Klinkenabschnitts 216 erstreckt.

Der Aktuator 224 wird bei einer von einer Sicherheitssensorik des Cabriolet-Fahrzeugs erkannten Unfallsituation von einem zugeordneten Steuergerät angesteuert, wobei der Aktuator 224 im Crash-Fall eine Zustandsänderung erfährt, welche eine translatorische Verschiebung des Sperrglieds 222 entgegen der Kraft einer Druckfeder 232 in Richtung des Aktuators 224 zur Folge hat. Das Sperrglied 222 wird durch diese translatorische Bewegung in Richtung des Aktuators 224 aus der umfangsseitigen Ausnehmung 228 an dem scheibenartigen Verriegelungselement 214 bis zu einem vordefinierten, beispielsweise als Anschlag vorgegeben Punkt herausgezogen, womit dieses in Folge der über den Bolzen 218 des Überrollkörpers 6 ausgeübten Zugkraft eine Rotationsbewegung ausführt.

Zur Begrenzung dieser Rotationsbewegung ist am Umfang des scheibenartigen Verriegelungselementes 214 ein Anschlag 234 ausgebildet, an dem das bei Auslösung der Halteeinrichtung aus der Ausnehmung 228 zurückgezogene Sperrglied 222 nach einer den Klinkenabschnitt 216 aus Eingriff mit dem Bolzen 218 bringenden Rotation des Verriegelungselementes 214 zur Anlage kommt.

Bei der gezeigten Ausführung ist eine Verschwenkung des Verriegelungselements 214 um die Drehachse 212 um ca. 30° zur Auslösung der Halteeinrichtung 210 ausreichend. Folglich ist die Umfangskontur des Verriegelungselements 214 in einem Bereich von annähernd 30° in einem Bereich anschließend an die umfangsseitige Ausnehmung 228 entgegen der auslösesinnigen Drehrichtung des Verriegelungselements 214 radial zurückgenommen bis zu dem umfangsseitigen Anschlag 234.

Der Anschlag 234, der nach Auslösung der Halteeinrichtung 210 das scheibenartige Verriegelungselement 214 im Zusammenwirken mit dem Sperrglied 222 in Position hält, erleichtert bei einer eventuellen Fehlauslösung eine einfache Reversierung des Überrollschutzsystems.

Die Reversierung erfolgt dabei auf einfache Weise durch eine Verdrehung des Verriegelungselementes 214 in sperrendem Sinne, bis der Klinkenabschnitt 216 wieder in Eingriff mit dem Bolzen 218 des in seine Ruheposition zurückverlagerten Überrollkörpers 6 gelangt. In dieser Position fluchtet die umfangsseitige Ausnehmung 228 mit dem Sperrglied 222, welches unter dem Druck der Druckfeder 232 in die umfangsseitige Ausnehmung 228 einrastet und das Verriegelungselement 214 gegen Rotation sichert.

Das Verriegelungselement 214 stellt eine Zweistufenscheibe dar, bei der die Anordnung und Dimensionierung der Ausnehmung 228 und des Anschlags 234 je nach Anordnung und Gestaltung des Aktuators 224 und des Sperrglieds 222 zu wählen sind.

In von der gezeigten Ausführung abweichenden Ausführungsvariante kann beispielsweise vorgesehen sein, dass der Anschlag für das Sperrglied 222 an dem Verriegelungselement als ein Vorsprung an der Umfangskontur des Verriegelungselements ausgebildet ist, wobei der Anschlag auch als ein separates, an dem Verriegelungselement befestigtes Bauteil ausgeführt sein kann.

Ebenfalls abweichend von dem gezeigten Ausführungsbeispiel können der vorgesehene Rotationswinkel des Verriegelungselementes zwischen der verriegelten und entriegelten Stellung und die Ausgestaltung des Stellglieds, welches beispielsweise auch ein Stift anstelle des gezeigten flachen Blechelementes sein kann, dem jeweiligen Anwendungsfall entsprechend gewählt werden.

Wie den Figuren der Zeichnung weiter zu entnehmen ist, ist seitlich des Sperrglieds 222 ein Widerlager 236 in Form eines Bolzens vorgesehen, welcher zur Aufnahme von Kräften dient, welche im gelösten Zustand der Halteeinrichtung 210 seitens des Verriegelungselements 214 und des Anschlags 234 auf das Sperrglied 222 seitlich ausgeübt werden. Mit Hilfe des Widerlagers 236 kann ein Verkippen des Sperrglieds 222 im gelösten Zustand der Halteeinrichtung 210 auch bei einer sehr langen Ausführung des Sperrglieds 222 vermieden werden.

Das Widerlager 236 ist wie der die Drehachse 212 bildende Bolzen 230 an einem ein Gehäuseelement darstellenden Grundkörper 238 der Halteeinrichtung 210 gelagert, wobei der Grundkörper 238 gegenüberliegende Seiten 240, 242 aufweist, zwischen denen der Bolzen 230 und das Widerlager 236 gelagert sind.

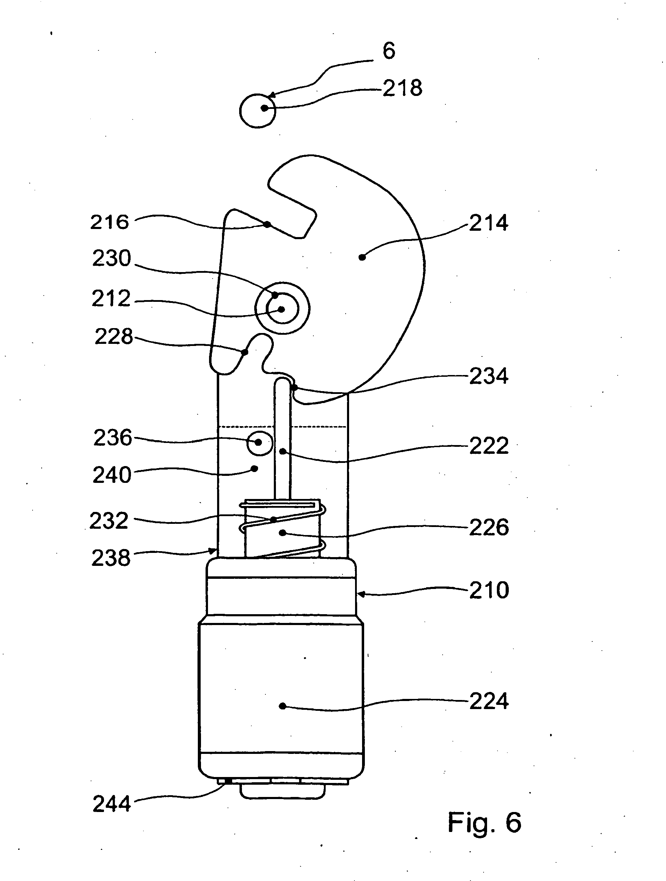

Bei der gezeigten Ausführung ist der Grundkörper 238, von dem in Fig. 6 nur eine Seite 240 dargestellt ist, in besonders einfacher Weise im Wesentlichen als ein U-Profil ausgebildet, welches z. B. ein umgeformtes Flachband sein kann. Der Grundkörper 238 weist vorliegend an seinem im Einbauzustand oberen Ende, d. h. an den freien Enden der Seiten 240, 242, jeweils eine rampenartige Führung 246 zum gesicherten Zuführen des Überrollkörpers 6 bzw. dessen Haltelasche 218 in den Eingriffsbereich mit dem Klinkenabschnitt 216 des Verriegelungselements 214 auf.

Zwischen den die U-Schenkel des U-Profils bildenden Seiten 240, 242 des Grundkörpers 238 erstreckt sich eine Traverse 244, welche vorliegend als Sitz des Aktuators 224 genutzt wird.

Der gezeigte Grundkörper 238 bildet somit eine Art Systemkäfig, welcher vorteilhafterweise bei wesentlich einfacherer Ausgestaltung die Aufgaben eines bei bekannten Ausführungen häufig recht aufwändig ausgeführten Gehäuses erfüllt.

Der Aktuator 224 ist bei der Ausführung nach Fig. 4, Fig. 5, und Fig. 6 als ein elektromagnetischer Aktuator üblicher Bauweise ausgebildet, jedoch eignen sich auch nach einem anderen Wirkprinzip arbeitende Aktuatoren, wie z. B. piezoelektrische Aktuatoren, pyrotechnische Aktuatoren oder mit einem Schmelzeinsatz ausgestattete Aktuatoren, zur Anwendung bei der Halteeinrichtung 210.

In seiner einen Überlebensraum für die Fahrzeuginsassen bereitstellenden, ausgefahrenen Stützposition ist der Überrollkörper 6 durch die Verriegelungsvorrichtung 500 bzw. 600 selbsttätig gesperrt, wobei die Verriegelungseinrichtung 500 gemäß der in Fig. 1 bis Fig. 3 und Fig. 7 gezeigten Ausführung wenigstens eine erste Rasteinrichtung 505 aufweist, welche mit einer U-förmigen Sperrklinke 508 ausgebildet ist. Die Sperrklinke 508, welche in Fig. 7 in Alleinstellung gezeigt ist, weist im Bereich ihrer U-Traverse ein Zahnprofil 507 mit spitz zulaufenden Zähnen auf, deren Geometrie so gewählt ist, dass diese in Stützlage des Überrollkörpers 6 in eine Rastleiste 509 einer zweiten, an dem Überrollkörper 6 ausgebildeten Rasteinrichtung 506 eingreifen.

Die Sperrklinke 508 ist dabei an dem Rohrprofil 30 abgestützt, indem sie in eine umfangsseitige Ausnehmung 31 an dem Rohrprofil 30 eingesetzt ist, welche im Wesentlichen die Umfangskontur der Sperrklinke 508 aufweist. Somit ist die Sperrklinke 508 in axialer Bewegungsrichtung Z des Überrollkörpers 6 formschlüssig an dem Rohrprofil 30 gehalten.

In Querrichtung des Überrollkörpers 6, d. h. in Bewegungsrichtung der Sperrklinke 508, ist die Sperrklinke 508 mittels einer Blattfeder 510 angefedert gelagert.

Wie insbesondere der Fig. 7 zu entnehmen ist, ist die Blattfeder 510 in der hier gezeigten Montageposition zunächst in Längsrichtung der Sperrklinke 508 angeordnet. Mit dieser Lage der Blattfeder 510 kann die Sperrklinke 508 in die beispielsweise durch Fräsen hergestellte Ausnehmung 31 an dem Rohrprofil 30 eingesetzt werden. Durch ein Verdrehen der Blattfeder 510 um 90° in ihre Funktionslage wird diese mit ihren axialen Enden in an dem Rohrprofil 30 ausgebildete Aufnahmeschlitze 33 eingeführt, womit die Sperrklinke 508 mittels der Blattfeder 510 gefedert gegenüber dem Rohrprofil 30 gelagert ist.

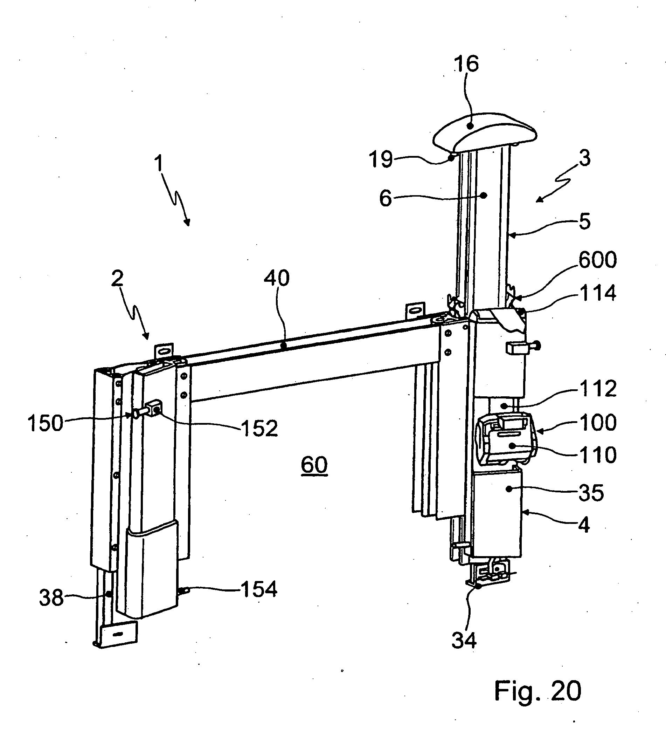

Die Fig. 8 zeigt eine Ausführungsvariante der Überrollschutz-Vorrichtung 3, welche mit einer identischen Ausführung der korrespondierenden Überrollschutz-Vorrichtung 2 Teil einer in den Fig. 20 bis Fig. 22 gezeigten Baugruppe ist, jedoch auch für die in Fig. 1 gezeigte Baugruppe geeignet ist. Einzelheiten der Überrollschutz-Vorrichtung 3 der Fig. 8 sind deutlicher in der Explosionsdarstellung der Fig. 8a gezeigt.

Die Ausführung der Überrollschutz-Vorrichtung 2 bzw. 3 gemäß Fig. 8 unterscheidet sich von der Ausführung gemäß Fig. 1 bis Fig. 7 im Wesentlichen durch eine alternative Halteeinrichtung 310 für den Überrollkörper 6 und eine alternative Verriegelungsvorrichtung 600 zum Abstützen des Überrollkörpers 6 in seiner ausgefahrenen Position und ein modifiziertes Antriebssystem 50. Hinsichtlich seiner Profilgestaltung entspricht der Überrollkörper 6, welcher hier eine im Wesentlichen ovale Querschnittsform aufweist, grundsätzlich der Ausführung gemäß Fig. 1 bis Fig. 7.

Wie in Fig. 8a deutlich zu sehen ist, ist der Federkraftspeicher 52 hier als Zugfeder ausgebildet, welche in dem Aufnahmekanal 8 des Überrollkörpers 6 an einer Federführungsstange 53 geführt ist. An der Federführungsstange 53 ist an ihrem oberen Ende eine Federaufhängung 55 ausgebildet und an einem mittleren Bereich ein Federteller 56 verschieblich gelagert ist, wobei die Zugfeder 52 zwischen der Federaufhängung 55 und dem an einem Anschlag des Überrollkörpers 6 anliegendem Federteller 56 in Ruhelage des Überrollkörpers 6 auf Zug vorgespannt ist.

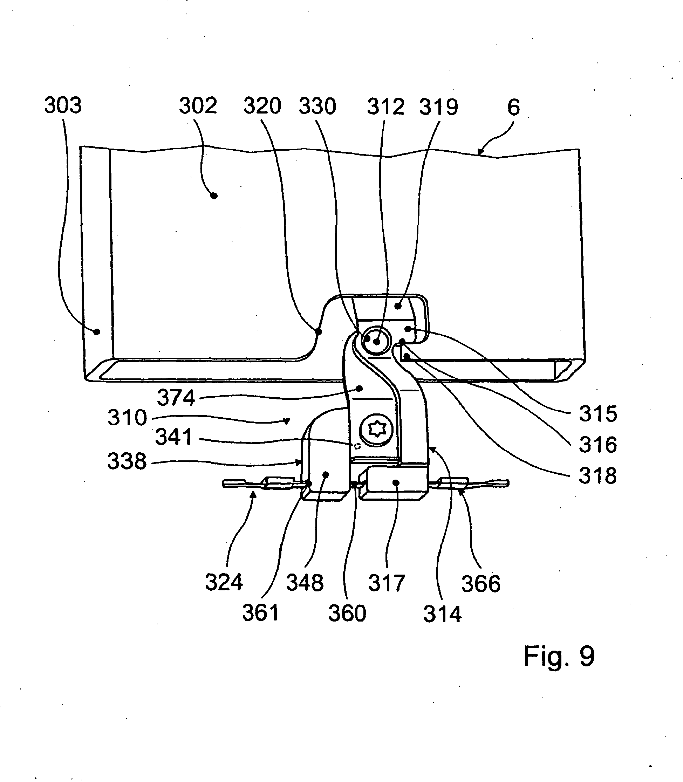

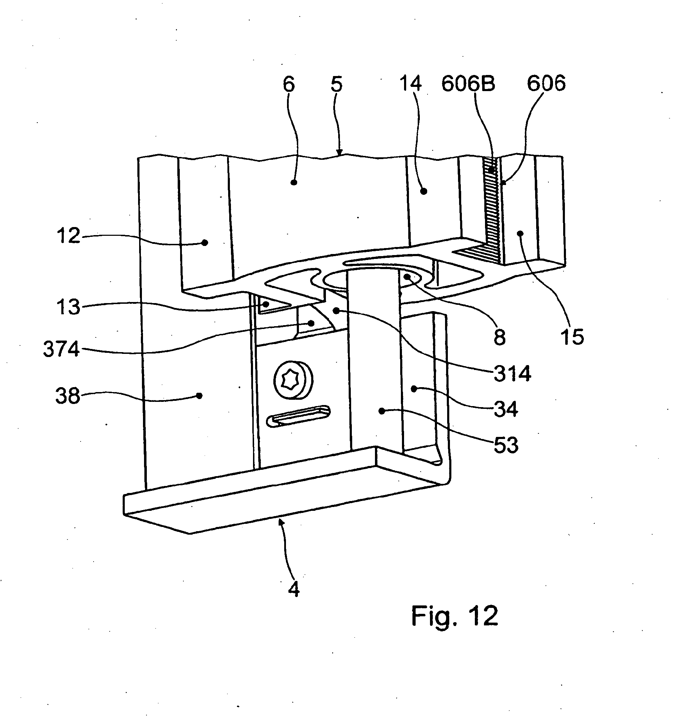

Die Fig. 9 bis Fig. 12 zeigen in vereinfachter Darstellung jeweils die mit einem Schmelzeinsatz 348 ausgestattete Halteeinrichtung 310 zum Halten des Überrollkörpers 6 der Überrollschutz-Vorrichtung 3.

Die Halteeinrichtung 310 umfasst ein um eine feste Drehachse 312 schwenkbar gelagertes Verriegelungselement 314, welches an seinem Umfang einen Klinkenabschnitt 316 aufweist, welcher bei den gezeigten Ausführungen wiederum als U-Ausnehmung ausgebildet ist und zum Zusammenwirken mit einem Verriegelungselement-Gegenkörper 318 an dem Überrollkörper 6 ausgelegt ist.

Der Verriegelungselement-Gegenkörper könnte auch hier ebenfalls in einfacher Weise als eine Haltelasche unterhalb einer Ausnehmung an dem Überrollkörper 6 oder auch als ein Bolzen, ein Absatz an dem Überrollkörper, oder ein geeignetes Hakenelement, ausgebildet sein.

Bei der Ausführung gemäß Fig. 9 bis Fig. 12 ist der Verriegelungselement-Gegenkörper 318 als ein Absatz im Bereich einer zum unteren Rand des Überrollkörpers 6 hin offenen Ausnehmung 320 an dem Überrollkörper 6 ausgebildet, wobei die Ausnehmung 320, der Absatz 318 und der Klinkenabschnitt 316 des Verriegelungselements 314 auch hier derart aufeinander abgestimmt gestaltet sind, dass das Verriegelungselement 314 bei einer Rotation um dessen Drehachse 312 ohne Weiteres aus Eingriff mit dem Klinkenabschnitt 316 gebracht werden kann. Auch hier ist der Überrollkörper 6 in seiner abgesenkten Ruhelage durch den Eingriff des Verriegelungselements 314 mit dem Verriegelungselement-Gegenkörper 318 gehalten, und kann durch Betätigung eines Aktuators 324 ausgelöst werden, indem der Aktuator 324 eine zumindest bereichsweise Rotation des Verriegelungselements 314 zulässt, so dass dieses außer Eingriff mit dem Verriegelungselement-Gegenkörper 318 gerät.

Bei der Ausgestaltung gemäß Fig. 9 bis Fig. 12 ist das Verriegelungselement 314 durch einen im Crash-Fall aufschmelzbaren Schmelzeinsatz 348 des Aktuators 324 in seiner den Überrollkörper 6 verriegelnden Ruhestellung gehalten, wobei das Verriegelungselement 314 in Ruheposition radial und auf Zug belastet über den Schmelzeinsatz 348 mit einem Grundkörper 338 verbunden ist.

Das Verriegelungselement 314 ist bei diesem Ausführungsbeispiel hebelartig als eine Art Schwenkhebel ausgebildet. Dabei weist ein Hebelende 315 einen Klinkenabschnitt 316 zum Eingriff mit dem Verriegelungselement-Gegenkörper 318 und das andere Hebelende 317 eine Halterung 360 für den mit einer Energiezuführeinrichtung 366 verbundenen Schmelzeinsatz 348 auf.

Der Grundkörper 338 ist ein Blockelement mit einem im Wesentlichen L-förmigen Querschnitt, wobei ein L-Schenkel 339 eine Halterung 361 für den Schmelzeinsatz 348 mit einer Energiezuführeinrichtung 367 aufweist und der andere L-Schenkel 341 eine Lagerung 374 des schwenkbaren Verriegelungselements 314 mit dessen Lagerbolzen 330 trägt.

Die Lagerung 374 stellt ein mit dem L-Schenkel 341 des Grundkörpers 338 verdrehsicher verschraubtes Lagerblech dar, welches auf einer Seite des Grundkörpers 338 aufliegend mit diesem verschraubt ist und entgegen der Lagerung des Bolzens 330 des Verriegelungselements 314 S-förmig gebogt ist, so dass das Verriegelungselements 314, das Lagerblech 374 und der Lagerbolzen 330 in Axialrichtung des Lagerbolzens 330 eine Erstreckung aufweisen, welche im Wesentlichen der Tiefe des sich mit dieser Baugruppe axial überdeckenden Grundkörpers 338 entspricht. Somit weist die Halteeinrichtung 310 vorteilhafterweise eine sehr geringe Bautiefe auf.

Das Verriegelungselement 314 fluchtet bei der in den Fig. 9 bis Fig. 12 gezeigten Ausführung mit einer Seitenwand 302 des hier im Wesentlichen als Kastenprofil ausgebildeten, eine Kassette darstellenden Überrollkörpers 2 und greift gleichsam seitlich in eine zum unteren Rand hin offene Ausnehmung 320 des z. B. durch Federkraft vorgespannten Überrollkörpers 2 ein, wobei das Verriegelungselement 314 einen an der Kontur der Ausnehmung 320 ausgebildeten, nasenartigen Absatz 318, welcher den Verriegelungselement-Gegenkörper bildet, hintergreift.

Es versteht sich, dass der Fachmann je nach Anwendungsfall auch eine Anordnung der Halteeinrichtung 310 an einer Schmalseite 303 des Überrollkörpers 6 oder einen Eingriff in eine Ausnehmung mit Haltelasche wählen kann.

Die Halterungen 360, 361 für den Schmelzeinsatz 348 sind auch hier als Nuten ausgebildet, in die der vorliegend plattenförmige Schmelzeinsatz 348 fest arretiert eingesetzt ist. Der Schmelzeinsatz 348 kann zur Arretierung eine auf die ihn haltenden Nuten abgestimmte Formgebung und zur schnelleren Aufschmelzbarkeit in seinem mittleren Bereich eine Querschnittsverengung aufweisen.

Die Energiezuführeinrichtung 367 zum Erzeugen der zum Schmelzen des Schmelzeinsatzes 348 notwendigen Hitze ist zweckmäßig mittels an eine Stromquelle angeschlossener, an den Enden des Schmelzeinsatzes 348 befestigter Klemmen 365, 367 ausgeführt.

Das Material des Schmelzeinsatzes kann jedes für Schmelzsicherungen bekannte Material aus Metall und/oder Kunststoff darstellen.

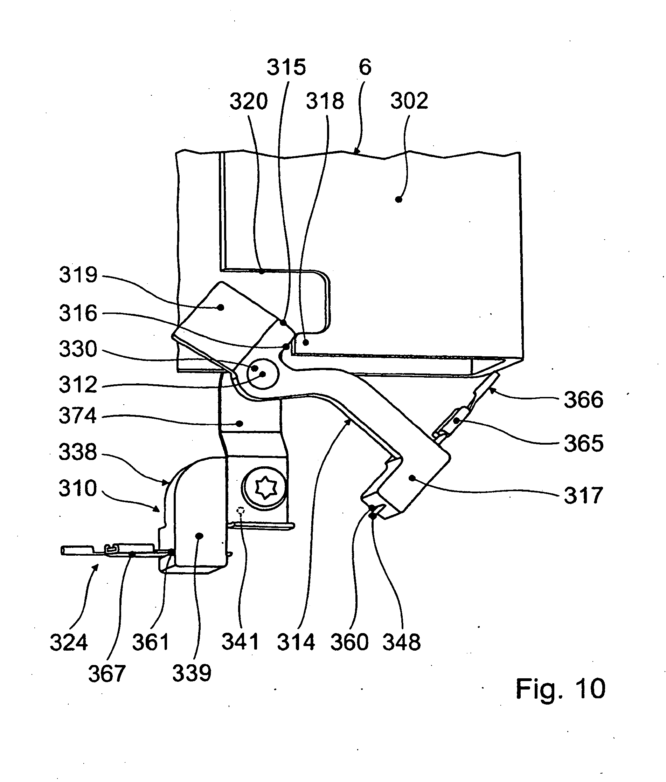

Wie insbesondere in Fig. 10 ersichtlich ist, wird bei einem Schmelzen und Durchtrennen des Schmelzeinsatzes 348 infolge der Stromzufuhr, welche von einem Steuergerät bei einer erkannten Crash-Situation eingestellt wird, der vorgespannte Überrollkörper von dem Verriegelungselement 314 freigegeben, indem das Verriegelungselement 314 wegen der Zugbelastung seitens des ausfahrenden Überrollkörpers 6 verschwenkt wird, wobei der Klinkenabschnitt 316 außer Eingriff mit dem Absatz 318 gerät.

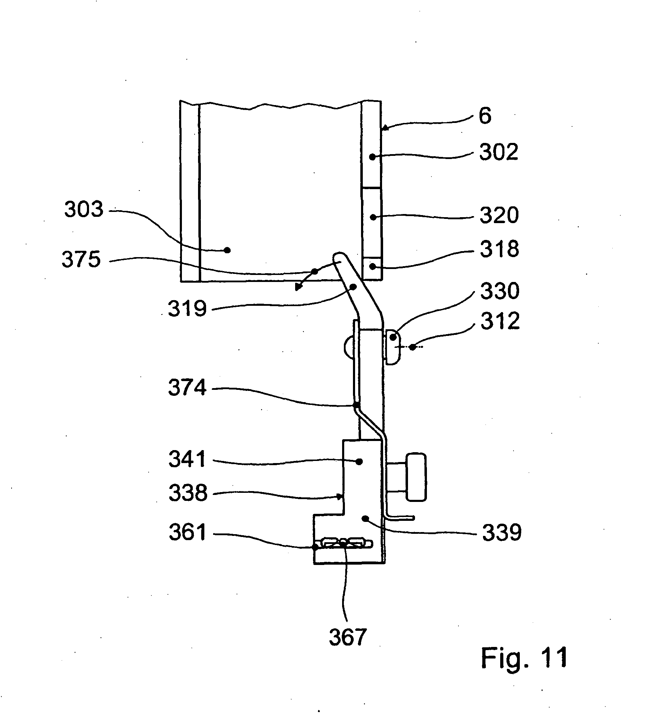

Die Reversierung des Überrollschutzsystems mit einer Rückführung des ausgefahrenen Überrollkörpers 6 in dessen abgesenkte Ruheposition kann bei dem Ausführungsbeispiel gemäß Fig. 9 bis Fig. 12 auf einfache Weise durch ein Absenken des Überrollkörpers 6 in seine Ruheposition erfolgen, wobei der Überrollkörper 6 zunächst auf eine besonders deutlich in Fig. 11 ersichtliche, an der Oberkante des dem Überrollkörper 2 zugewandten Hebelendes 315 ausgebildete, in Axialrichtung des Lagerbolzens 330 des Verriegelungselements 314 verlaufende Schräge 319 des Verriegelungselements 314 trifft.

Das Verriegelungselement 314 ist zumindest abschnittsweise derart biegsam ausgebildet, dass der sich abwärts bewegende Überrollkörpers 6 bei einem Gleiten entlang der Schräge 319 mit dem Absatz 318 das Verriegelungselement 314 in Richtung des in Fig. 11 ersichtlichen Pfeiles 375 auslenkt bzw. wegbiegt, bis der Klinkenabschnitt 316 in die Ausnehmung 320 des Überrollkörpers 6 einrastet und diesen hält.

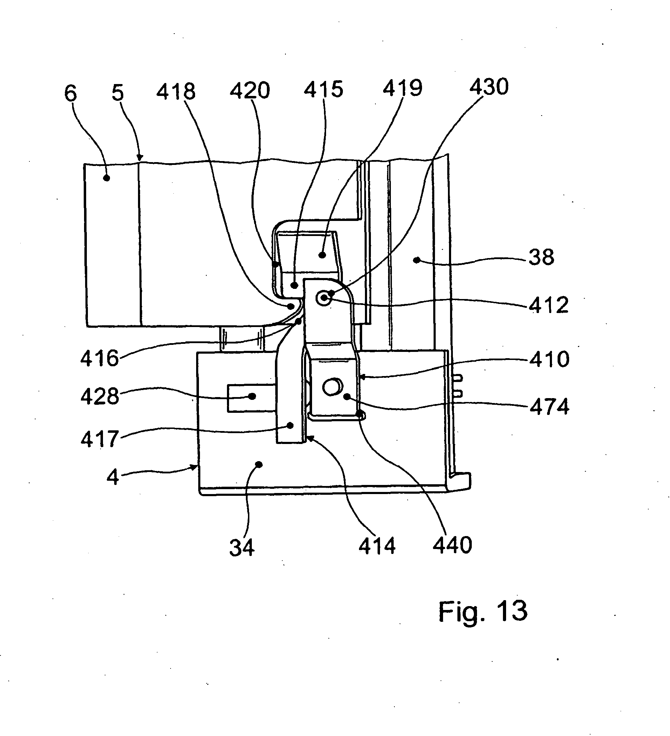

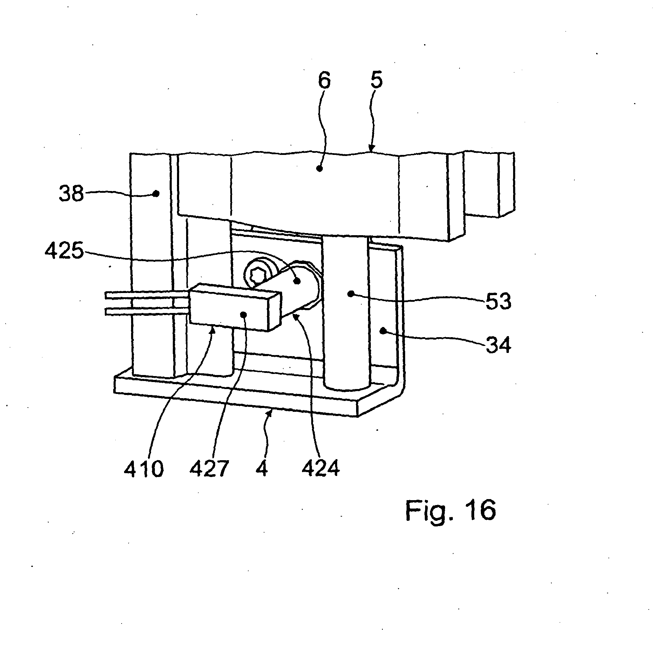

Die Fig. 13 bis Fig. 16 zeigen in vereinfachter Darstellung eine weitere Ausführungsform einer Halteeinrichtung 410 zum Halten des Überrollkörpers 6, welche hinsichtlich des Verriegelungselements der in den Fig. 9 bis Fig. 12 gezeigten Ausführung entspricht, jedoch pyrotechnisch antreibbar ist und alternativ zu der in den Fig. 9 bis Fig. 12 gezeigten Halteeinrichtung 310 verwendet werden kann.

Wie die zuvor beschriebenen Halteeinrichtungen umfasst auch die Halteeinrichtung 410 ein um eine feste Drehachse 412 schwenkbar gelagertes Verriegelungselemente 414, welches im Wesentlichen wie das Verriegelungselement 314 der in den Fig. 9 bis Fig. 12 gezeigten Halteeinrichtung 310 an seinem Umfang mit einem Klinkenabschnitt 416 ausgebildet ist und welches mit einem Verriegelungselement-Gegenkörper 418 an dem Überrollkörper 6 zusammenwirkt.

Der Verriegelungselement-Gegenkörper 418 ist auch bei dieser Ausführung als ein Absatz im Bereich eines unteren Randes des Überrollkörpers 6 unterhalb einer offenen Ausnehmung 420 an dem Überrollkörper 6 ausgebildet.

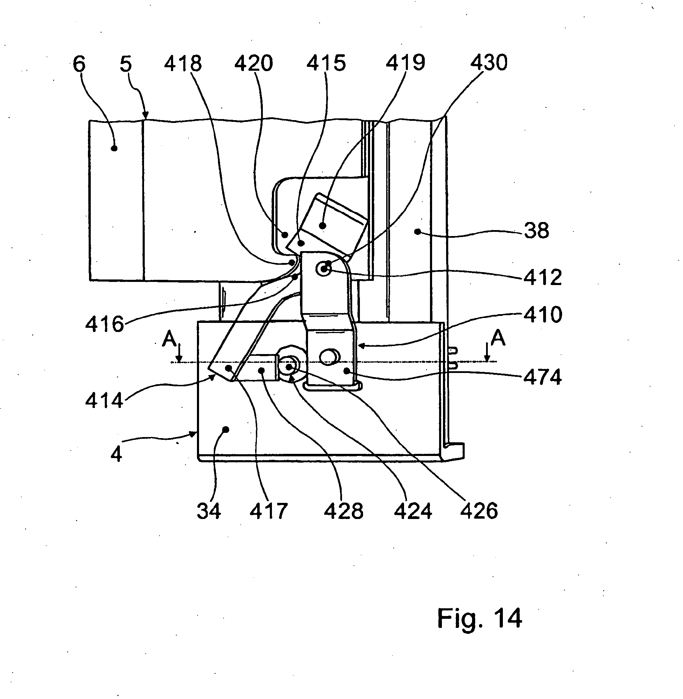

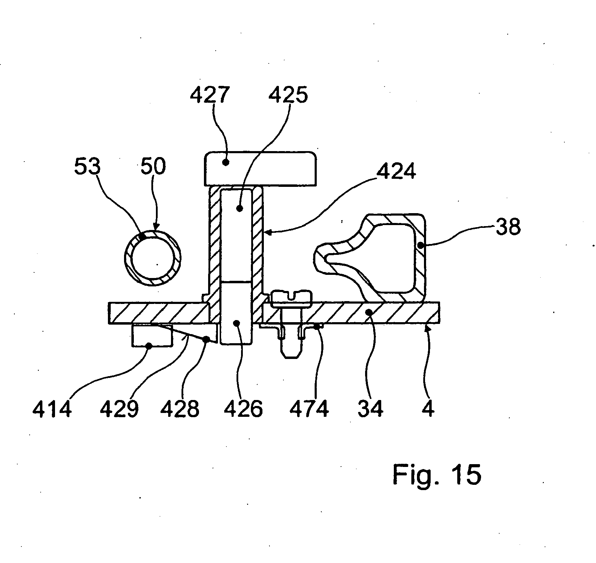

Zum Auslösen des Überrollkörpers 6 muss das Verriegelungselement 414 aus einer in Fig. 13 gezeigten Ruhestellung, in welcher sich das Verriegelungselement 414 in Eingriff mit dem Verriegelungselement-Gegenkörper 418 befindet, in eine in Fig. 14 und Fig. 15 gezeigte verschwenkte Position überführt werden, in der das Verriegelungselement 414 den Überrollkörper 6 freigibt.

Das Verriegelungselement 414 ist in der Art eines Schwenkhebels ausgebildet, wobei ein Hebelende 415 den Klinkenabschnitt 416 zum Eingriff mit dem den Verriegelungselement-Gegenkörper darstellenden Absatz 418 des Überrollkörpers 6 und das andere Hebelende 417 seitlich an einem Anschlagelement 428 anliegt, welches ein Widerlager für die seitens des Überrollkörpers 6 auf das Verriegelungselement 414 ausgeübte Kraft bildet und eine Rotation des Verriegelungselements 414 verhindert.

Zur Lagerung des Verriegelungselements 414 an dem ersten, karosseriefesten Modul 4 des Überrollschutzsystems ist ein mit dem Fußelement 34 der Überrollschutz-Vorrichtung verschraubtes Lagerblech 474 vorgesehen, welches auf einer Seite des Fußelements 34 anliegt und durch eine Lasche 440 hierin geführt ist sowie an seinem anderen Ende einen Lagerbolzen 430 für das schwenkbare Verriegelungselement 414 trägt. Das Lagerblech 474 ist entgegen der Lagerung des Bolzens 430 S-förmig gebogt, womit das Verriegelungselement 414, das Lagerblech 474 und der Lagerbolzen 430 in Axialrichtung des Lagerbolzens 430 eine Überdeckung aufweisen und somit nur eine geringe Bautiefe benötigen.

Der Aktuator 424, welcher eine Verschwenkung des Verriegelungselements 414 bewirkt, weist vorliegend einen pyrotechnischen Treibsatz 425 auf. Der pyrotechnische Treibsatz 425 ist bei der gezeigten Ausführung auf der dem Anschlagelement 428 und dem Lagerblech 474 abgewandten Seite des Fußelements 34 derart angeordnet, dass seine Wirkrichtung im Wesentlichen lotrecht zur Schwenkrichtung des Verriegelungselements 414 ist.

Wie insbesondere der Fig. 15 zu entnehmen ist, treibt der pyrotechnische Treibsatz 425 einen das Fußelement 34 durchgreifenden Bolzen 426 an, welcher derart angeordnet ist, dass der in Ruhezustand des Verriegelungselements 414 an diesem anliegt. Bei einer elektrischen Kontaktierung des pyrotechnischen Treibsatzes 425 mittels einer Zündeinrichtung 427 bei einem Crash-Signal wird der Bolzen 426 durch den pyrotechnischen Treibsatz 425 soweit in Richtung des unteren Hebelendes 417 des Verriegelungselements 414 verschoben, dass das Verriegelungselement 414 mit seinem unteren Hebelende 417 über das Anschlagelement 428 gehoben wird. Aufgrund der an dem Überrollkörper 6 in Ausfahrrichtung anliegenden Kraft wird das Verriegelungselement 414 daraufhin verschwenkt, wobei es an einer Keilfläche 429 des Anschlagelements 428 in Richtung ges Fußelementes 34 gleitet.

Die Reversierung der Halteeinrichtung 410 zum Halten des wieder zurück verlagerten Überrollkörpers 6 in seiner Ruhelage kann dadurch erfolgen, dass bei einem zurück verlagerten Bolzen 426 des pyrotechnischen Treibsatzes 425 eine Rückverschwenkung des Verriegelungselements 414 erfolgt, wobei der Überrollkörper 6 bei einer Verlagerung in seine Ruheposition auf eine an der Oberkante des oberen Hebelendes 415 des Verriegelungselements 414 ausgebildete, in Axialrichtung des Lagerbolzens 430 verlaufende Schräge 419 des Verriegelungselements 414 auftrifft. Eine gewisse Biegsamkeit des Verriegelungselements 414 ermöglicht bei einem Gleiten des Überrollkörpers 6 entlang der Schräge 419 mit dem Absatz 418 eine Auslenkung des Verriegelungselements 414 in Axialrichtung seines Lagerbolzens 430, bis der Klinkenabschnitt 416 in die Ausnehmung 420 des Überrollkörpers 6 einrastet.

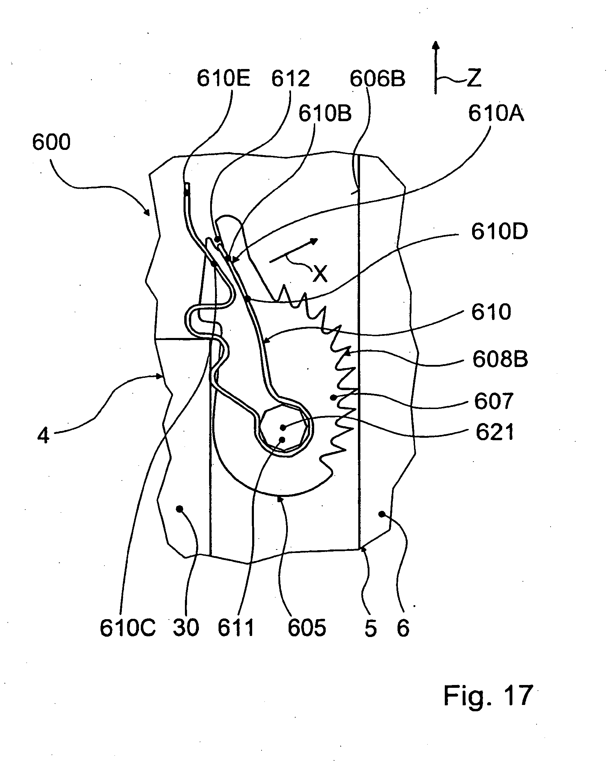

Die Fig. 17 bis Fig. 19 zeigen näher die bei der Ausführung der Überrollschutz-Vorrichtung gemäß Fig. 8 verwendete Verriegelungsvorrichtung 600 zum selbsttätigen Arretieren des ausgefahrenen Überrollkörpers 6 in seiner Stützposition.

Wie daraus entnehmbar ist, weist die Verriegelungsvorrichtung 600 wenigstens eine mit dem ersten Modul 4 fest verbundene erste Rasteinrichtung 605 auf, die zum Abstützen des zweiten Moduls 5 mit einer mit dem zweiten Modul 5 fest verbundenen zweiten Rasteinrichtung 606 in Wirkverbindung bringbar ist und die eine Bewegung des zweiten Moduls 5 ausgehend von seiner Ruhelage in Richtung seiner Stützlage zulässt.

Die erste Rasteinrichtung 605 der Verriegelungsvorrichtung 600 umfasst bei dem in Fig. 8 dargestellten Ausführungsbeispiel zwei in Richtung ihrer Wirkposition mit einer Kraft beaufschlagbare, karosseriefest drehbar gelagerte und jeweils mit einem Zahnprofil 607 ausgeführte Sperrkörper 608A, 608B.

Jedem Sperrkörper 608A, 608B ist jeweils eine Federeinrichtung 609, 610 zugeordnet, über die die Sperrkörper 608A, 608B jeweils in Richtung der Wirkposition der ersten Rasteinrichtung 605 derart angefedert sind, dass die Sperrkörper 608A, 608B um Lagerbolzen aus der in Fig. 17 dargestellten Position jeweils in eine durch einen Pfeil X in Fig. 17 dargestellte Drehrichtung verschwenkt werden.

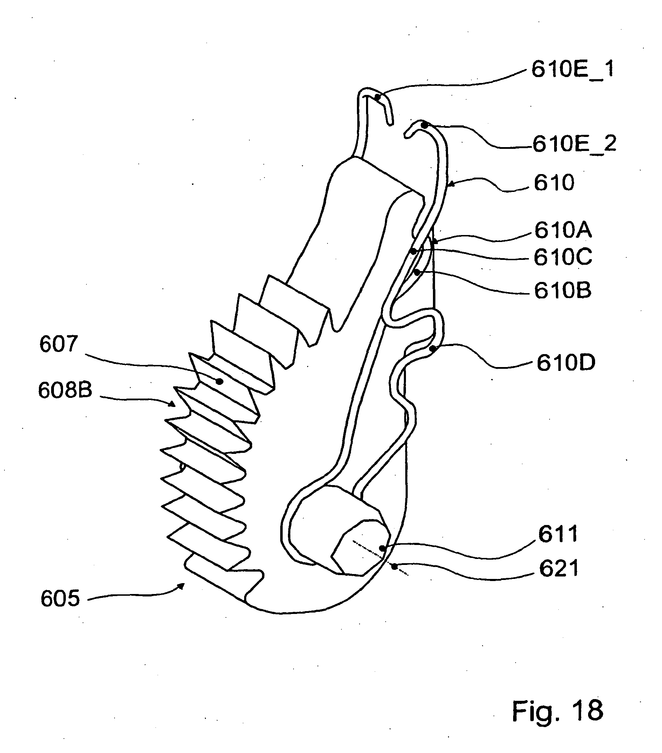

Die Lagerbolzen 611 sind vorliegend an dem karosseriefesten Modul 4 abgestützt, wobei die Sperrkörper 608A und 608B über die als Bügeldrahtfedern ausgebildeten Federeinrichtungen 609 und 610 in der in Fig. 17 und Fig. 18 näher dargestellten Art und Weise in axialer Erstreckung der Lagerbolzen 611 fixiert und somit eindeutig positioniert sind.

Dazu umgreifen die Federeinrichtungen 609 und 610 die Lagerbolzen 611 auf beiden Seiten der hier scheibenartig ausgeführten Sperrkörper 608A und 608B. Die Federeinrichtungen 609 und 610 sind im Umschlingungsbereich der Lagerbolzen 611 in Einbaulage vorgespannt, um die Reibungskraft zwischen den Federeinrichtungen 609 und 610 und den Lagerbolzen 611 auf einem derartigen Wert einzustellen, dass die Sperrkörper 608A und 608B auf den Lagerbolzen 611 nicht verschieblich sind.

Diese Ausführung führt im Vergleich zu einer Presspassung zwischen den Lagerbolzen und den Sperrkörpern zu einer Verringerung der Fertigungskosten und auch zu einer Vereinfachung der Montage, da im Bereich der Fügedurchmesser geringere Anforderung an die Fertigungstoleranzen gestellt sind und die Lagerbolzen mit geringerem fertigungstechnischen Aufwand mit den Sperrkörpern verbaubar sind. Des Weiteren führt die vorbeschriebene Arretierung der Sperrkörper 608A und 608B auf den Lagerbolzen 611 über die Federeinrichtungen 609 und 610 im Vergleich zu einer Sicherung der Sperrkörper auf den Lagerbolzen über separate Befestigungselemente ebenfalls zu einer Reduzierung der Herstellkosten und auch zu einer Vereinfachung der Montage, da bei der in Fig. 17 und Fig. 18 dargestellten Lösung die Teileanzahl gering ist und die Arretierung der Sperrkörper auf den Lagerbolzen in einem einzigen Montageschritt, bei dem die Federeinrichtungen 609 und 610 über die Lagerbolzen 611 geschoben und verrastet werden, hergestellt ist.

Die zweite Rasteinrichtung 606 ist vorliegend durch jeweils eine einem Sperrkörper 608A bzw. 608B zugewandte und gegenüber dem jeweils damit korrespondierenden Sperrkörper 608A bzw. 608B verfahrbare Oberfläche 606B des zweiten Moduls 5, bzw. Überrollkörpers 6 ausgebildet, mit der jeweils das Zahnprofil 607 eines Sperrkörpers 608A bzw. 608B in Wirkposition der ersten Rasteinrichtung 605 derart in Reibeingriff steht, dass eine Bewegung des zweiten Moduls 5 aus einer von der Ruhelage abweichenden Position in Richtung seiner Ruhelage verhindert ist.

Die den Sperrkörpern 608A und 608B jeweils zugeordneten Federeinrichtungen 609 und 610 sind jeweils mit Sperreinrichtungen 609A, 610A ausgebildet, wobei die Sperrkörper bei aktivierter Sperreinrichtung 610A in einer einen deaktivierten Zustand der ersten Rasteinrichtung 605 äquivalenten Position haltbar sind. Dazu sind die Bügeldrahtfedern 609 und 610 mit jeweils einem ersten Bügelbereich 610B ausgeführt, der zur Aktivierung der Sperreinrichtungen 610A mit einem zweiten Bügelbereich 610C in der in Fig. 18 dargestellten Art und Weise derart in Wirkverbindung bringbar ist, dass die Sperrkörper 608A und 6β8B in der dem deaktivierten Zustand der ersten Rasteinrichtung 605 äquivalenten Position, in welcher eine Relativbewegung zwischen dem ersten Modul 4 und dem zweiten Modul 5 durch die Verriegelungsvorrichtung 600 nicht verhindert wird, gehalten werden.

Die Bügeldrahtfedern 609 und 610 sind jeweils mit einem ersten Schenkel 610D, welcher im Wesentlichen U-förmig ausgebildet ist, in schlitzartige Ausnehmungen 612 der Sperrkörper 608A und 608B eingesetzt und liegen mit ihrem zweiten Schenkel 610E derart an dem karosseriefesten Modul 4 an, dass sich die Federeinrichtungen 609 und 610 in einer Vorspannlage befinden. Aufgrund dieser Vorspannung können die Sperrkörper 608A und 608B in deaktiviertem Zustand der Sperreinrichtungen 609A, 610A in ihren dem arretierenden Zustand der ersten Rasteinrichtung 605 äquivalenten Positionen um die Lagerbolzen 611 verschwenkt werden.

Die ersten Bügelbereiche 610B der Bügeldrahtfedern stellen jeweils einen sich an den Mittelbereich, d. h. die U-Traverse, der Bügeldrahtfedern, welcher in die schlitzartige Ausnehmung 612 der Sperrkörper eingelegt ist, anschließende Bereiche dar, in denen der erste Schenkel 610D der Bügeldrahtfedern mit einer größeren Breite ausgeführt ist als die zweiten Bügelbereiche 610C an deckungsgleichen Bereichen des zweiten, mit zwei offenen Bügeln ausgebildeten Schenkels 610E.

Die Schenkel 610D und 610E der Federeinrichtungen 609 und 610 bilden damit derart die Sperreinrichtungen 610A, dass sie sich in aktiviertem Zustand der Sperreinrichtungen 610A im Bereich der Bügelbereiche 610B und 610C hinterklemmend kreuzen, gegenseitig halten und aufgrund der inneren Vorspannung nicht aufspreizen können, wie es in Fig. 18 ersichtlich ist.

Zum Lösen bzw. Deaktivieren der Sperreinrichtungen 610A sind die Bügeldrahtfedern 609 und 610 im Bereich ihrer freien Enden mit in der in Fig. 18 näher dargestellten Art und Weise zueinander verschieblich ausgeführten Bügelenden 610E_1 und 610E_2 ausgeführt. Das bedeutet, dass die Sperreinrichtungen 610A jeweils dadurch deaktivierbar oder aktivierbar sind, dass der Abstand der Bügeldrahtenden der Federeinrichtungen 609 und 610 derart vergrößert wird, dass die Schenkelarme der Federeinrichtungen 609 und 610 im Bereich der Bügelbereiche 610B und 610C aneinander vorbeigeführt werden können.

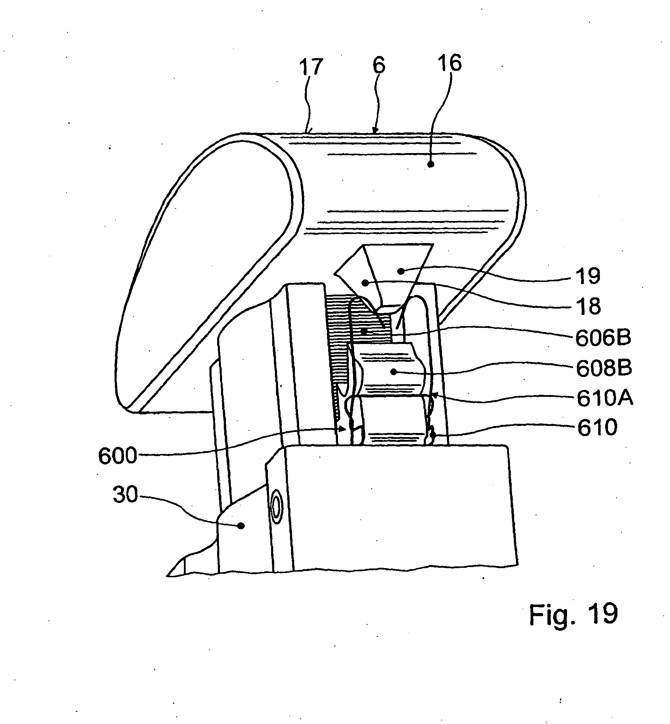

Die Sperrkörper 608A und 608B sind dann entweder in der nichtsperrenden Stellung durch die Sperreinrichtung 610A gemäß Fig. 18 und Fig. 19 gehalten oder zur Einstellung der Wirkposition der ersten Rasteinrichtung 605 gemäß der in Fig. 17 dargestellten Position freigegeben.

Wenn die Sperreinrichtung 610A der Federeinrichtung 610, die dem Sperrkörper 608B in Fig. 17 zugeordnet ist, deaktiviert ist, ist der Sperrkörper 608B von der Federeinrichtung 610 in eine dem Wirkzustand der ersten Rasteinrichtung 605 entsprechende Position um den Lagerbolzen 611 verschwenkt. In dieser Position des Sperrkörpers 608B wird zwar eine Ausfahrbewegung des zweiten Moduls 5 in Richtung seiner Stützlage von der ersten Rasteinrichtung 605 zugelassen, jedoch wird eine Bewegung des zweiten Moduls 5 in Richtung seiner Ruhelage durch eine Wirkverbindung zwischen dem Zahnprofil 607 des Sperrkörpers 608B und der zweiten Rasteinrichtung 606 wirkungsvoll verhindert.

Die Vorspannkraft der Federeinrichtungen 609 und 610 in Richtung der Wirkpositionen der Sperrkörper 608A und 608B ist vorliegend derart vorgesehen, dass eine Anlage der Sperrkörper 608A und 608B an der vorliegend als Oberfläche des Überrollkörpers 6 ausgebildeten Rasteinrichtung 606 eine Ausfahrbewegung nicht behindert. Die Zahnexzenter darstellenden Sperrkörper 608A und 608B werden bei der Ausfahrbewegung des Überrollkörpers 6 von diesem um die Lagerbolzen 611A entgegen der Drehrichtung X verschwenkt und bauen somit keine Sperrwirkung zwischen den beiden Rasteinrichtungen 605 und 606 auf.

Wenn der Sperrkörper 608B in seine Wirkposition verschwenkt wird, dringt der Sperrkörper 608B mit seinem der Verrastungsfläche 606B zugewandten Zahnprofil 607 wenigstens bereichsweise in die Verrastungsfläche 606B der Rasteinrichtung 606 ein, womit zwischen dem Sperrkörper 608B und dem Überrollkörper 6 ein Formschluss vorliegt und der Überrollkörper 6 sicher gegen eine Einfahrbewegung in Richtung seiner Ruhelage gehalten ist.

Bei der in den Fig. 8, Fig. 17, Fig. 18 und Fig. 19 gezeigten Ausführung ist die Zahngeometrie des Zahnprofils 607 mit spitz zulaufenden, messerartige Enden aufweisenden Zähnen ausgeführt und das Material für das Zahnprofil 607 gegenüber dem Material der Oberfläche des Überrollkörpers 6 härter, um eine zuverlässige Arretierung des Überrollkörpers 6 zu gewährleisten.

Während hier im Wesentlichen nur eine Verformung der von dem Sperrkörper kontaktierten Oberfläche vorgesehen ist, kann alternativ hierzu auch eine ggf. elastische Verformbarkeit des Zahnprofils vorgesehen sein.

Der Überrollkörper 6 ist an der Unterseite seines Prallprofils 16 mit Keilflächen 18 aufweisenden, vorliegend pyramidenstumpfartig ausgebildeten Entriegelungselementen 19 ausgebildet, mittels denen die Sperrkörper 608A, 608B nach einer Einfahrbewegung des Überrollkörpers 6 in Richtung seiner Ruhelage in Eingriff mit der zweiten Rasteinrichtung 606 gebracht werden.

Zur Reversierung in die Ausgangsposition bzw. Ruhelage des Überrollkörpers 6 werden die Sperrkörper 608A, 608B zurückgezogen, wobei sich die verbreiterten Bügelbereiche 610B der Federeinrichtungen 609 und 610 hinter den freien Bügelbereichen 610C verhaken und somit die Wirkung der Bügeldrahtfedern 609, 610 aufheben. Der Überrollkörper 6 kann damit in seine Ausgangsposition abgesenkt werden. Bei Erreichen der Ruhelage des Überrollkörpers 6 werden die freien Federenden 610E_1, 610E_2 über die vorgenannten Entriegelungselemente 19 des Überrollkörpers 6 auseinandergedrückt, so dass die Federeinrichtungen 609 und 610 die Zahnexzenter bzw. Sperrkörper 608A, 608B wieder an der Verrastungsfläche 606B des Überrollkörpers 6 zur Anlage bringen.

Zur Erhöhung der Rastkraft der Verriegelungsvorrichtung 600 sind die Verrastungsflächen 606B vorliegend mit einer Rändelung bzw. mit einer den Reibwert der Verrastungsflächen erhöhenden Profilierung ausgebildet.

Bei dem beschriebenen Ausführungsbeispiel sind die Sperrkörper jeweils an dem karosseriefesten ersten Modul gelagert, wobei jedoch auch eine umgekehrte Anordnung mit einer Lagerung an dem ausfahrbaren Modul und einem Reibeingriff an einer karosseriefesten Oberfläche vorgesehen sein kann.

In den Fig. 20 bis Fig. 22 ist eine Ausführungsvariante des Überrollschutzsystems 1 gezeigt, bei dem nicht nur die karosseriefesten und ausfahrbaren Module 4, 5 der Überrollschutz-Vorrichtungen 2, 3 zusammen mit der Halteeinrichtung 210 bzw. 310 oder 410, der Verriegelungsvorrichtung 500 bzw. 600 und dem Antriebssystem 50 eine außerhalb des Fahrzeugs funktionsfähig vormontierte Baugruppe bilden, sondern bei dem die einer Sitzreihe zugeordneten Überrollschutz-Vorrichtungen 2, 3 insgesamt eine vormontierte, am Fahrzeugaufbau festlegbare Baugruppe bilden. Hierzu sind die karosseriefesten Module 4 der Überrollschutz-Vorrichtungen 2, 3 mittels eines Querträgers 40 miteinander verbunden.

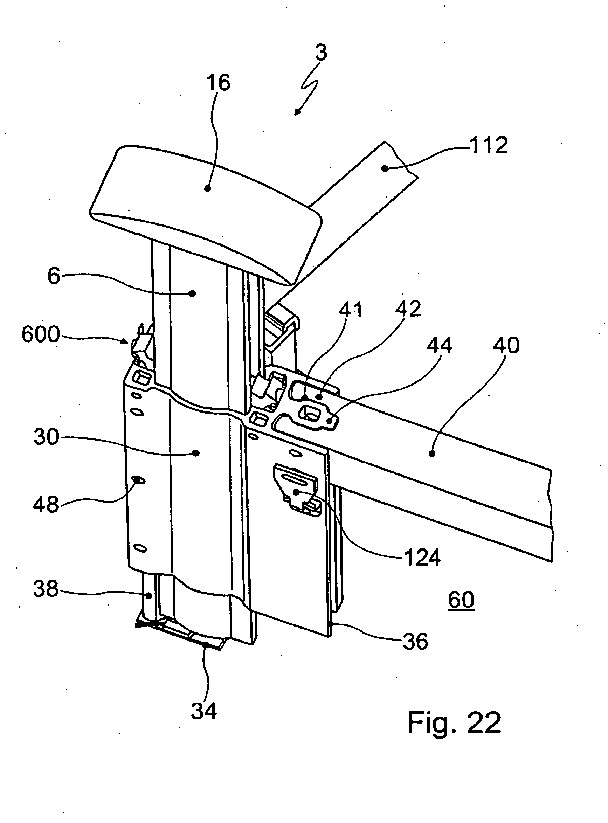

Wie insbesondere der Fig. 22 zu entnehmen ist, sind die Enden des Querträgers 40 bei der vorliegenden Ausführung jeweils mit einem Hinterschneidungen 41 aufweisenden Profil 42 ausgebildet, welches hinsichtlich seiner Formgebung mit einem Profil 44 des Rohrprofils 30 des karosseriefesten ersten Moduls 4 korrespondiert. Dabei sind die Profile 42 und 44 W- bzw. U-förmig derart zueinander gestaltet, dass der Querträger 40 mit seinem U-Profil 42 in das W-Profil 44 des Rohrprofils 30 eingesetzt werden kann, womit der Querträger 40 formschlüssig in das Rohrprofil 30 eingeklemmt ist und gegebenenfalls durch Schraubverbindungen zusätzlich gesichert werden kann.

Der Querträger 40 bildet somit eine vormontierbare Einheit aus den Überrollschutz-Vorrichtungen 2, 3, welche über seitliche Bohrungen 48 mit dem Fahrzeugaufbau verschraubt werden kann.

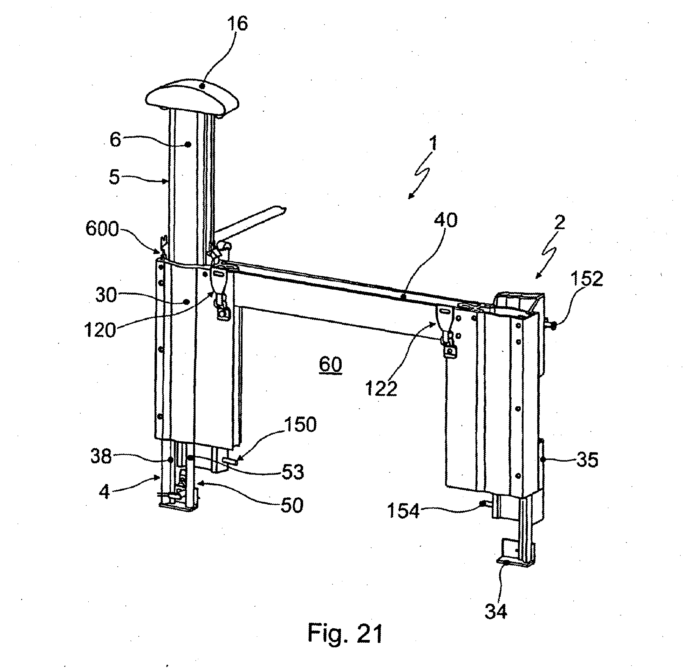

Bei der in den Fig. 20 bis Fig. 22 dargestellten Ausführungsvariante ist das fahrzeugfeste erste Modul 4 der jeweiligen Überrollschutz-Vorrichtung 2, 3 jeweils mit einem integrierten Rückhaltegurtsystem 100 ausgebildet, wobei in mittlerer Höhe des Rohrprofils 30 ein Gurtaufroller 110 an sich bekannter Bauart in einen dem Überrollkörper 6 in Fahrzeugfrontrichtung vorgelagerten Profilbereich 35 des fahrzeugfesten Rohrprofils 30 eingesetzt ist. Von diesem Gurtaufroller 110 ist der Sicherheitsgurt 112 in dem als Hohlprofil ausgeführten Profilbereich 35 zu einer oberen Sicherheitsgurtführung bzw. -umlenkung 114 geführt. Von dort aus erstreckt sich der Sicherheitsgurt 112 in der in Fig. 21 und Fig. 22 gezeigten Art und Weise in Fahrzeugvorwärtsrichtung über eine dem Profilbereich 35 der Überrollschutz-Vorrichtung 2 bzw. 3 vorgelagerte Rücklehne eines Fahrzeugsitzes und kann in üblicher Weise mit einem Sicherheitsgurtschloss von einem Fahrzeuginsassen verbunden werden.

Des Weiteren umfasst das gezeigte Rückhaltegurtsystem 100 zwei obere Verankerungspunkte 120, 122 für einen Kindersitzhaltegurt, wobei jeweils einer der oberen Verankerungspunkte 120 bzw. 122 einer Überrollschutz-Vorrichtung 2 bzw. 3 zugeordnet ist. Der obere Verankerungspunkt 120, 122 ist jeweils an einer dem Fahrzeuginnenraum abgewandten Profilwand 36 des karosseriefesten ersten Moduls 4 bzw. des Rohrprofils 30 befestigt und weist eine Lasche 124 auf, durch die ein an einem Kindersitz befestigter Gurt gezogen oder darin eingehakt werden kann. Somit bildet der obere Verankerungspunkt 120 bzw. 122 für einen Kindersitz, welcher üblicherweise an zwei Befestigungspunkten im Sitzbankbereich fixiert ist, einen dritten Befestigungspunkt.

Wie dem in den Fig. 20 bis Fig. 22 gezeigten Ausführungsbeispiel weiter zu entnehmen ist, weisen die Überrollschutz-Vorrichtungen 2, 3 jeweils eine Sitzanbindungseinrichtung 150 auf, welche vorliegend jeweils mit einem oberen und einen unteren Rücksitzlehnenbefestigungsbolzen 152 bzw. 154 ausgebildet ist.

Das erfindungsgemäße Überrollschutzsystem 1 kann somit ein Multifunktionsmodul darstellen, welches die Funktionalitäten einer Überrollschutz-Vorrichtung, einer Durchladeöffnung, einer Fahrzeugquerversteifung, einer Rückhaltegurtaufnahme und einer Sitzbefestigung verbinden kann, wobei das gesamte Multifunktionsmodul in seiner vorgeschlagenen Kompaktbauweise separat außerhalb des Fahrzeugs komplettiert und in ein Fahrzeug zur Endmontage eingesetzt werden kann.

Neben der Einbindung der hier beschriebenen Funktionalitäten ist es auch denkbar, dass das Multifunktionsmodul Teil eines Verdecks eines Cabriolet-Fahrzeugs ist bzw. dass ein Verdeckgestänge an die die Überrollschutz-Vorrichtungen aufweisende Bauteilgruppe angebunden ist.

Die Zuordnung der einzelnen beschriebenen Komponenten zu den jeweils gezeigten Ausführungsbeispielen ist nur beispielhaft, so dass eine beliebige Kombination der beschriebenen Komponenten und deren Zusammenfügen zu einem Multifunktionsmodul möglich ist.

## Patentansprüche

1. Cabriolet-Fahrzeug mit einem Überrollschutzsystem mit wenigstens einer einem Fahrzeugsitz (26, 28) zugeordneten Überrollschutz-Vorrichtung (2, 3), jeweils bestehend aus
- einem karosseriefesten ersten Modul (4) mit Führungseinrichtungen (30) für ein zwischen einer abgesenkten Ruhelage und einer erhöhten Stützlage verfahrbares zweites Modul (5) mit einem Überrollkörper (6), welcher eine Prallfläche (17) zur Kontaktierung eines Untergrundes bei einem Fahrzeugüberschlag aufweist;
- einer lösbaren Halteeinrichtung (210, 310, 410) zum Halten des zweiten Moduls (5) in seiner Ruhelage;
- einer Verriegelungsvorrichtung (500, 600), mittels der das zweite Modul (5) in einer von seiner Ruhelage abweichenden Position gegen einen in Richtung der Ruhelage wirkenden Kraftangriff selbsttätig abstützbar ist; und
- einem Antriebssystem (50) mit einem Federkraftspeicher (52), mittels dem das zweite Modul (5) in seiner Ruheposition vorgespannt und im Bedarfsfall in Richtung seiner Stützlage verlagerbar ist,
**dadurch gekennzeichnet,**
**dass** die Überrollschutz-Vorrichtungen (2, 3) zweier Fahrzeugsitze (26, 28) einer Sitzreihe unmittelbar am oder im Fahrzeugsitz (26, 28) angeordnete Überrollkörper (6) aufweisen, die mit ihren zugehörigen Modulen (4, 5) jeweils in entgegengesetzter Richtung außermittig zu dem zugeordneten Fahrzeugsitz (26, 28) und eine Durchlademöglichkeit im Bereich einer Fahrzeugquerversteifung bildend beabstandet zueinander angeordnet sind.

2. Cabriolet-Fahrzeug nach Anspruch 1,
**dadurch gekennzeichnet,**
**dass** der Überrollkörper (6) stangenartig ausgeführt ist und in seinem Inneren einen axialen Aufnahmekanal (8) für den Federkraftspeicher (52) aufweist; und dass das erste Modul (4) als Führungseinrichtungen des Überrollkörpers (6) ein Rohrprofil (30) aufweist, in dem in Ruhelage des Überrollkörpers (6) wenigstens ein oberer Endbereich und in Stützlage ein unterer Endbereich des Überrollkörpers (6) aufgenommen sind.

3. Cabriolet-Fahrzeug nach Anspruch 1 oder 2,
**dadurch gekennzeichnet,**
**dass** zwischen den Überrollschutz-Vorrichtungen (2, 3) zweier Fahrzeugsitze (26, 28) eine Durchladeöffnung (60) angeordnet ist.

4. Cabriolet-Fahrzeug nach Anspruch 1, 2 oder 3,
**dadurch gekennzeichnet,**
**dass** der Überrollkörper (6) einen im Wesentlichen runden Querschnitt aufweist.

5. Cabriolet-Fahrzeug nach einem der Ansprüche 1 bis 4,
**dadurch gekennzeichnet,**
**dass** der Überrollkörper (6) im Wesentlichen als eine gerade Stange ausgebildet ist.

6. Cabriolet-Fahrzeug nach Anspruch 5,
**dadurch gekennzeichnet,**
**dass** der Überrollkörper (6) an seinem oberen Ende ein Prallprofil (16) mit einer gegenüber der Querschnittsfläche des Überrollkörpers (6) vergrößerten Prallfläche (17) aufweist.

7. Cabriolet-Fahrzeug nach einem der Ansprüche 1 bis 6,
**dadurch gekennzeichnet,**
**dass** das eine Führungseinrichtung des Überrollkörpers (6) bildende Rohrprofil (30) mit seinem unteren Rand gegenüber einem Fußelement (34) des ersten Moduls (4) beabstandet angeordnet ist,

8. Cabriolet-Fahrzeug nach Anspruch 7,
**dadurch gekennzeichnet,**
**dass** das Rohrprofil (30) mit dem Fußelement (34) des ersten Moduls (4) über ein seitlich des Rohrprofils befestigtes Verbindungsprofil (38) verbunden ist.

9. Cabriolet-Fahrzeug-nach einem der Ansprüche 1 bis 8,
**dadurch gekennzeichnet,**
**dass** eine Rasteinrichtung (505, 506) der Verriegelungseinrichtung (500, 600) an dem Rohrprofil (30) abgestützt ist.

10. Cabriolet-Fahrzeug nach einem der Ansprüche 1 bis 9,
**dadurch gekennzeichnet,**
**dass** das Rohrprofil (30) eine umfangsseitige Ausnehmung (31) zur Aufnahme der Rasteinrichtung (505) der Verrieglungseinrichtung (500) aufweist, wobei die Rasteinrichtung (505) in Bewegungsrichtung (Z) des Überrollkörpers (6) formschlüssig an dem Rohrprofil (30) gehalten ist.

11. Cabriolet-Fahrzeug nach einem der Ansprüche 1 bis 10,
**dadurch gekennzeichnet,**
**dass** das erste Modul (4) und das zweite Modul (5), die Halteeinrichtung (210, 310, 410), die Verriegelungsvorrichtung (500, 600) und das Antriebssystem (50) eine außerhalb des Fahrzeugs funktionsfähig vormontierte Baugruppe bilden, die am Fahrzeugaufbau festlegbar ist

12. Cabriolet-Fahrzeug nach einem der Ansprüche 1 bis 11,
**dadurch gekennzeichnet,**
**dass** die einer Sitzreihe zugeordneten Überrollschutz-Vorrichtungen (2, 3) eine vormontierte, am Fahrzeugaufbau festlegbare Baugruppe bilden, wobei die einer Sitzreihe zugeordneten Überrollschutz-Vorrichtungen (2, 3) vorzugsweise mittels eines Querträgers (40) verbunden sind.

13. Cabriolet-Fahrzeug nach einem der Ansprüche 1 bis 12,
**dadurch gekennzeichnet,**
**dass** in das erste Modul (4) eine Sitzanbindungseinrichtung (150) integriert ist.

14. Cabriolet-Fahrzeug nach einem der Ansprüche 1 bis 13,
**dadurch gekennzeichnet,**
**dass** in das erste Modul (4) ein Rückhaltegurtsystem (100) mit Sicherheitsgurtführungen (110, 114) für wenigstens einen Sicherheitsgurt (112) integriert ist.

15. Cabriolet-Fahrzeug nach Anspruch 14,
**dadurch gekennzeichnet,**
**dass** das Rückhaltegurtsystem (100) wenigstens einen oberen Verankerungspunkt (120, 122) für einen Kindersitzhaltegurt umfasst.

16. Cabriolet-Fahrzeug nach einem der Ansprüche 1 bis 15,
**dadurch gekennzeichnet,**
**dass** die lösbare Halteeinrichtung (210) ein um eine feste Drehachse (212) schwenkbar gelagertes Verriegelungselement (214), welches einen Klinkenabschnitt (216) zur Wirkverbindung mit einem an dem Überrollkörper (6) angeordneten Verriegelungselement-Gegenkörper (218) in Ruheposition des Überrollkörpers (6) aufweist, umfasst, wobei das Verriegelungselement (214) in Ruheposition durch ein Sperrglied (222) eines Aktuators (224) gegen eine die Halteeinrichtung (210) lösende Rotation gesichert ist,
und wobei das Verriegelungselement (214) scheibenartig ausgebildet ist, mit einer umfangsseitigen Ausnehmung (228), in die das Sperrglied (222) in Ruheposition eingreift, und mit einem umfangsseitigen Anschlag (234), an dem das zur Überführung des Überrollkörpers (6) in dessen Stützposition durch den Aktuator (224) aus der Ausnehmung (228) zurückgezogene Sperrglied (222) nach einer den Klinkenabschnitt (216) aus Eingriff mit dem Verriegelungs-Gegenkörper (218) bringenden Rotation des Verriegelungselementes (214) anliegt.

17. Cabriolet-Fahrzeug nach Anspruch 16,
**dadurch gekennzeichnet,**
**dass** das Sperrglied (222) durch den Aktuator (224) in Axialrichtung linear bewegbar ist, wobei das Sperrglied (222) mittels einer Feder (232) entgegen dem Verriegelungselement (214) vorgespannt ist.

18. Cabriolet-Fahrzeug nach einem der Ansprüche 16 oder 17,
**dadurch gekennzeichnet,**
**dass** die Drehachse (212) des Verriegelungselementes (214) durch einen Bolzen (230) gebildet wird, welcher an gegenüberliegenden Seiten (240, 242) eines Grundkörpers (238) gelagert ist, wobei die Seiten (240, 242) des Grundkörpers (238) durch eine Traverse (244) miteinander verbunden sind, welche einen Sitz für den Aktuator (224) bildet.

19. Cabriolet-Fahrzeug nach einem der Ansprüche 16 bis 18,
**dadurch gekennzeictinet,**
**dass** der Aktuator als ein elektromagnetischer Aktuator ausgebildet ist.

20. Cabriolet-Fahrzeug nach einem der Ansprüche 1 bis 15,
**dadurch gekennzeichnet,**
**dass** die lösbare Halteeinrichtung (310) ein um eine feste Drehachse (312) schwenkbar gelagertes Verriegelungselement (314), welches einen Klinkenabschnitt (316) zur Wirkverbindung mit einem an dem Überrollkörper (6) angeordneten Verriegelungselement-Gegenkörper (318) in Ruheposition des Überrollkörpers (6) aufweist, umfasst, wobei das Verriegelungselement (314) in Ruheposition durch einen im Crash-Fall aufschmelzbaren Schmelzeinsatz (348) des Aktuators (324) gehalten ist.

21. Cabriolet-Fahrzeug nach Anspruch 20,
**dadurch gekennzeichnet,**
**dass** das Verriegelungselement in Ruheposition radial gegen einen Sitz, welcher durch Aufschmelzen des Schmelzeinsatzes aufhebbar ist, gedrückt ist.

22. Cabriolet-Fahrzeug nach Anspruch 20,
**dadurch gekennzeichnet,**
**dass** das Verriegelungselement (314) in Ruheposition radial und auf Zug belastet über den Schmelzeinsatz (348) mit einem Grundkörper (338) verbunden ist.

23. Cabriolet-Fahrzeug nach Anspruch 22,
**dadurch gekennzeichnet,**
**dass** das Verriegelungselement (314) hebelartig ausgebildet ist, wobei ein Hebelende (315) einen Klinkenabschnitt (316) zum Eingriff mit dem Verriegelungselement-Gegenkörper (318) bildet und im Bereich des anderen Hebelendes (317) eine Halterung (360) für den mit einer E-nergiezuführeinrichtung (366) verbundenen Schmelzeinsatz (348) angeordnet ist.

24. Cabriolet-Fahrzeug nach Anspruch 23,
**dadurch gekennzeichnet,**
**dass** das Verriegelungselement (314) im Bereich seines dem Überrollkörper (6) zugewandten Hebelendes (315) eine in Axialrichtung verlaufende Schräge (319) aufweist und derart biegsam ausgebildet ist, dass das Verriegelungselement (314) bei einer Reversierung einer Auslösung des Überrollkörpers (6) durch den Verriegelungselement-Gegenkörper (318) des abwärts bewegten Überrollkörpers (6) bis zu einem Eingriff des Klinkenabschnitts (316) auslenkbar ist.

25. Cabriolet-Fahrzeug nach einem der Ansprüche 1 bis 15,
**dadurch gekennzeichnet,**
**dass** die lösbare Halteeinrichtung (410) ein um eine feste Drehachse (412) schwenkbar gelagertes Verriegelungselement (414), welches einen Klinkenabschnitt (416) zur Wirkverbindung mit einem an dem Überrollkörper (6) angeordneten Verriegelungselement-Gegenkörper (418) in Ruheposition des Überrollkörpers (6) umfasst, wobei das Verriegelungselement (414) in Ruheposition in einer Anschlagposition gehalten ist, aus der es im Crash-Fall durch einen Aktuator (424) mit einem pyrotechnischen Treibsatz (425) in eine Rotationsposition überführbar ist.

26. Cabriolet-Fahrzeug nach einem der Ansprüche 1 bis 25,
**dadurch gekennzeichnet,**
**dass** die Verriegelungsvorrichtung (500) wenigstens eine erste Rasteinrichtung (505) aufweist, die zum Abstützen des zweiten Moduls (5) mit einer zweiten Rasteinrichtung (506) in Wirkverbindung bringbar ist und die eine Bewegung des zweiten Moduls (5) ausgehend von seiner Ruhelage in Richtung seiner Stützlage zulässt, wobei die erste Rasteinrichtung (505) eine Sperrklinke (508) mit einem Zahnprofil (507) aufweist und die zweite Rasteinrichtung (506) mit einer der Geometrie des Zahnprofils (507) der ersten Rasteinrichtung (505) angepassten Rastleiste (509) ausgebildet ist, und wobei die Sperrklinke (508) in Richtung der Rastleiste (509) angefedert ist.

27. Cabriolet-Fahrzeug nach einem der Ansprüche 1 bis 25,
**dadurch gekennzeichnet,**
**dass** die Verriegelungsvorrichtung (600) wenigstens eine erste Rasteinrichtung (605) aufweist, die zum Abstützen des zweiten Moduls (5) mit einer zweiten Rasteinrichtung (606) in Wirkverbindung bringbar ist und die eine Bewegung des zweiten Moduls (5) ausgehend von seiner Ruhelage in Richtung seiner Stützlage zulässt, wobei die eine der Rasteinrichtungen (605, 606) mit einem der Module (4, 5) verbunden ist und einen exzentrisch um eine Drehachse (21) drehbar gelagerten und mit einem Zahnprofil (607) ausgeführten Sperrkörper (608A, 608B) aufweist und die jeweils andere Rasteinrichtung (606) als eine dem Sperrkörper (608A, 608B) zugewandte Oberfläche (606B) des jeweils anderen Moduls (5) ausgebildet ist, mit der das Zahnprofil (607) des Sperrkörpers (608A, 608B) in seiner Wirkposition derart in Reibeingriff steht, dass eine Bewegung des zweiten Moduls (5) aus einer von der Ruhelage abweichenden Position in Richtung seiner Ruhelage verhindert ist.

28. Cabriolet-Fahrzeug nach Anspruch 27,
**dadurch gekennzeichnet,**
**dass** der Sperrkörper (608A, 608B) in seiner Wirkposition aufgrund eines Verformungszustandes im Bereich der kontaktierten, ggf. mit einer Profilierung ausgebildeten Oberfläche (606B) formschlüssig mit der Oberfläche (606B) in Eingriff steht.

29. Cabriolet-Fahrzeug nach Anspruch 27 oder 28,
**dadurch gekennzeichnet,**
**dass** eine dem Sperrkörper (608A, 608B) zugeordnete Federeinrichtung (609, 610), über die der Sperrkörper (608A, 608B) in Richtung seiner Wirkposition angefedert ist, mit einer Sperreinrichtung (610A) ausgebildet ist, mittels der der Sperrkörper (608A, 608H) bei aktivierter Sperreinrichtung (610A) in einer einem deaktivierten Zustand der ersten Rasteinrichtung (605) äquivalenten Position haltbar ist, wobei die Federeinrichtung (609, 610) vorzugsweise eine Bügeldrahtfeder aufweist und die Sperreinrichtung (610A) mit wenigstens einem ersten Bügelbereich (610B) ausgeführt ist, der zur Aktivierung der Sperreinrichtung (610A) mit einem zweiten Bügelbereich (610C) der Federeinrichtung (609, 610) in Wirkverbindung bringbar ist.

30. Cabriolet-Fahrzeug nach Anspruch 29,
**dadurch gekennzeichnet,**
**dass** die Bügeldrahtfeder (609, 610) mit einem ersten Schenkel (610D) derart in einer Ausnehmung (612) des Sperrkörpers (608A, 608B) angeordnet ist und mit ihrem zweiten Schenkel (610E) derart an einem karosseriefesten Modul (4) an liegt, dass sich die Federeinrichtung (609, 610) in einer Vorspannlage befindet, die die Sperrklinke (608A, 608B) bei deaktivierter Sperreinrichtung (610A) in eine dem aktivierten Zustand der ersten Rasteinrichtung (5) äquivalente Position um den Lagerbolzen (611) verschenkt.

31. Cabriolet-Fahrzeug nach einem der Ansprüche 27 bis 30,
**dadurch gekennzeichnet,**
**dass** die erste Rasteinrichtung (605) mit dem Sperrkörper (608A, 608B) an dem karosseriefesten ersten Modul (4) und die zweite Rasteinrichtung (606) an dem ausfahrbaren zweiten Modul (5) angeordnet ist.

## Claims

1. A convertible vehicle with a rollover protection system, comprising at least one rollover protection device (2, 3) assigned to a vehicle seat (26, 28), each rollover protection device (2, 3) consisting of
- a first module (4), fixed to the vehicle body, with guide devices (30) for a second module (5), said second module (5) being movable between a lowered rest position and an elevated support position and comprising a rollover element (6) with an impact surface (17) for contact with a ground surface in the event of a vehicle rollover;
- a releasable holding device (210, 310, 410) for holding the second module (5) in its rest position;
- a locking device (500, 600) by means of which the second module (5) can be automatically supported in a position deviating from its rest position against a force acting in the direction of the rest position, and
- a drive system (50) with a spring force accumulator (52) by means of which the second module (5) is biased in its rest position and can be shifted in the direction of its support position, as required,
**characterized in that**
the rollover protection devices (2, 3) of two vehicle seats (26, 28) of a row of seats comprise rollover elements (6) that are arranged directly at or in the vehicle seat (26, 28), and each of said rollover elements (6), including their respective modules (4, 5), are arranged off-center in opposite directions with respect to the assigned vehicle seat (26, 28) and are spaced apart from each other so as to form a passage in the region of a transverse vehicle reinforcement.

2. Convertible vehicle according to claim 1,
**characterized in that**
the rollover element (6) has a bar-shaped design and comprises in its interior an axial receiving channel (8) for the spring force accumulator (52); and
that the first module (4) comprises, as the guide devices for the rollover element (6), a tube profile (30) in which at least an upper end region is received in the rest position of the rollover element (6) and a lower end region of the rollover element (6) is received in the support position.

3. Convertible vehicle according to claim 1 or 2,
**characterized in that**
a passage opening (60) is arranged between the rollover protection devices (2, 3) of two vehicle seats (26, 28).

4. Convertible vehicle according to claim 1, 2, or 3,
**characterized in that**
the rollover element (6) has a substantially round cross section.

5. Convertible vehicle according to any one of claims 1 to 4,
**characterized in that**
the rollover element (6) is provided substantially as a straight bar.

6. Convertible vehicle according to claim 5,
**characterized in that**
the rollover element (6) comprises, at its upper end, an impact profile (16) with an impact surface (17) that is enlarged with respect to the cross sectional area of the rollover element (6).

7. Convertible vehicle according to any one of claims 1 to 6,
**characterized in that**
the tube profile (30), which forms a guide device for the rollover element (6), is spaced apart at its lower edge from a base element (34) of the first module (4).

8. Convertible vehicle according to claim 7,
**characterized in that**
the tube profile (30) is connected to the base element (34) of the first module (4) by a connecting profile (38) that is fastened laterally to the tube profile.

9. Convertible vehicle according to any one of claims 1 to 8,
**characterized in that**
a catch device (505, 506) of the locking device (500, 600) is supported on the tube profile (30).

10. Convertible vehicle according to any one of claims 1 to 9,
**characterized in that**
the tube profile (30) has a peripheral recess (31) for receiving the catch device (505) of the locking device (500), the catch device (505) being held to the tube profile (30) in a shape-locking manner in the movement direction (Z) of the rollover element (6).

11. Convertible vehicle according to any one of claims 1 to 10,
**characterized in that**
the first module (4) and the second module (5), the holding device (210, 310, 410), the locking device (500, 600), and the drive system (50) form an assembly that is pre-mounted ready-for-operation outside the vehicle and can be fixed to the vehicle body.

12. Convertible vehicle according to any one of claims 1 to 11,
**characterized in that**
the rollover protection devices (2, 3) assigned to a row of seats form a pre-mounted assembly that can be fixed to the vehicle body, the rollover protection devices (2, 3) assigned to a row of seats preferably being connected by means of a crossbar (40).

13. Convertible vehicle according to any one of claims 1 to 12,
**characterized in that**
a seat-connecting device (150) is integrated into the first module (4).

14. Convertible vehicle according to any one of claims 1 to 13,
**characterized in that**
a restraining belt system (100) with safety belt guides (110, 114) for at least one safety belt (112) is integrated into the first module (4).

15. Convertible vehicle according to claim 14,
**characterized in that**
the restraining belt system (100) comprises at least an upper anchorage point (120, 122) for a child seat restraining belt.

16. Convertible vehicle according to any one of claims 1 to 15,
**characterized in that**
the releasable holding device (210) comprises a locking element (214) mounted to pivot around a fixed axis of rotation (212), said locking element (214) having a detent section (216) designed to cooperate with a locking element counterpart (218) arranged on the rollover element (6) in the rest position of the rollover element (6),
the locking element (214) being secured in the rest position by a blocking element (222) of an actuator (224) against a rotation that releases the holding device (210), and
the locking element (214) being designed as a disk with a peripheral recess (228), into which the blocking element (222) engages in the rest position, and with a peripheral stop (234), against which the blocking element (222), retracted from the recess (228) by the actuator (224) to transfer the rollover element (6) into its support position, lies after a rotation of the locking element (214) that disengages the detent section (216) from the locking element counterpart (218).

17. Convertible vehicle according to claim 16,
**characterized in that**
the blocking element (222) is linearly movable by the actuator (224) in an axial direction, the blocking element (222) being biased counter to the locking element (214) by means of a spring (232).

18. Convertible vehicle according to any one of claims 16 or 17,
**characterized in that**
the axis of rotation (212) of the locking element (214) is formed by a pin (230) that is supported on opposite sides (240, 242) of a base element (238), the sides (240, 242) of said base element (238) being connected to each other by a traverse (244) that forms a seat for the actuator (224).

19. Convertible vehicle according to any one of claims 16 to 18,
**characterized in that**
the actuator is provided as an electromagnetic actuator (224).

20. Convertible vehicle according to any one of claims 1 to 15,
**characterized in that**
the releasable holding device (310) comprises a locking element (314) mounted to pivot around a fixed axis of rotation (312), said locking element (314) having a detent section (316) designed to cooperate with a locking element counterpart (318) arranged on the rollover element (6) in the rest position of the rollover element (6), the locking element (314) being held in the rest position by a fusible insert (348) of the actuator (324) that can be melted in the event of an accident.

21. Convertible vehicle according to claim 20,
**characterized in that**
the locking element, in the rest position, is urged radially against a seat that can be eliminated by melting of the fusible insert.

22. Convertible vehicle according to claim 20,
**characterized in that**
the locking element (314), in the rest position, is loaded radially under tension and connected via the fusible insert (348) to a base element (338).

23. Convertible vehicle according to claim 22,
**characterized in that**
the locking element (314) is designed as a lever, in which one lever end (315) forms a detent section (316) for engagement with the locking element counterpart (318), and a mount (360) for the fusible insert (348), connected to an energy supply device (366), is arranged in the region of the other lever end (317).

24. Convertible vehicle according to claim 23,
**characterized in that**
the locking element (314) comprises, in the region of its lever end (315) facing the rollover element (6), a slope (319) extending in an axial direction, and is designed to be flexible such that the locking element (314), during a reversal of the release of the rollover element (6), can be deflected by the locking element counterpart (318) of the downward moving rollover element (6) to an engagement of the detent section (316).

25. Convertible vehicle according to any one of claims 1 to 15,
**characterized in that**
the releasable holding device (410) includes a locking element (414) mounted to pivot around a fixed axis of rotation (412), said locking element (414) having a detent section (416) designed to cooperate with a locking element counterpart (418), disposed on the rollover element (6), when the rollover element (6) is in rest position, and in the rest position the locking element (414) is held in a stop position, from which it can be transferred to a rotation position by an actuator (424) with a pyrotechnic propellant charge (425) in the event of an accident.

26. Convertible vehicle according to any one of claims 1 to 25,
**characterized in that**
the locking device (500) has at least one first catch device (505), which can be operably connected to a second catch device (506) to support the second module (5) and permits movement of the second module (5), starting from its rest position, in the direction of its support position, said first catch device (505) comprising a detent (508) with a tooth profile (507) and said second catch device (506) being provided with a catch strip (509) adapted to the geometry of the tooth profile (507) of the first catch device (505), and said detent (508) being spring-loaded in the direction of the catch strip (509).

27. Convertible vehicle according to any one of claims 1 to 25,
**characterized in that**
the locking device (600) has at least one first catch device (605), which can be operably connected to a second catch device (606) to support the second module (5) and permits movement of the second module (5), starting from its rest position, in the direction of its support position, one of said catch devices (605, 606) being connected to one of the modules (4, 5) and having a blocking element (608A, 608B) that is mounted to rotate eccentrically around an axis of rotation (21) and is designed with a tooth profile (607), and the respective other catch device (606) being designed as a surface (606B) of the respective other module (5) facing the blocking element (608A, 608B), with which surface (606B) the tooth profile (607) of the blocking element (608A, 608B) is in frictional engagement in its active position, so that movement of the second module (5) moving from a position deviating from the rest position in the direction of its rest position is prevented.

28. Convertible vehicle according to claim 27,
**characterized in that**
the blocking element (608A, 608B), when in its active position, is in shape-locking engagement with the surface (606B) due to a state of deformation in the region of the contacted surface (606B) which may optionally be provided with profiling.

29. Convertible vehicle according to claim 27 or 28,
**characterized in that**
a spring device (609, 610), which is assigned to the blocking element (608A, 608B) and by which the blocking element (608A, 608B) is spring-loaded in the direction of its active position, is provided with a blocking device (610A) such that, when the blocking device (610A) is activated, the blocking element (608A, 608B) can be held in a position equivalent to a deactivated state of the first catch device (605), said spring device (609, 610) preferably having a wire spring and the blocking device (610A) being designed with at least a first clip area (610B) which can be operably connected to a second clip area (610C) of the spring device (609, 610) for activation of the blocking device (610A).

30. Convertible vehicle according to claim 29,
**characterized in that**
the wire spring (609, 610) is arranged with a first arm (610D) disposed in a recess (612) of the blocking element (608A, 608B) and its second arm (610E) in contact with a module (4) fixed to the vehicle body, such that the spring device (609, 610) is in a biased position that pivots the detent (608A, 608B), when the blocking device (610A) is deactivated, about the supporting pin (611) into a position equivalent to the activated state of the first catch device (5).

31. Convertible vehicle according to any one of claims 27 to 30,
**characterized in that**
the first catch device (605) with the blocking element (608A, 608B) is arranged on the first module (4) fixed to the vehicle body, and the second catch device (606) is arranged on the extendable second module (5).

## Revendications

1. Véhicule cabriolet avec un système de protection au retournement qui comprend au moins un dispositif de protection au retournement (2, 3) associé à un siège de véhicule (26, 28), chaque dispositif de protection au retournement (2, 3) consistant
- d'un premier module (4), monté fixe sur la carrosserie, avec des dispositifs de guidage (30) pour un deuxième module (5) qui est mobile entre une position de repos abaissée et une position d'appui relevée et qui comprend un corps de sécurité (6) avec une surface de choc (17) destinée à venir en contact avec le sol dans le cas d'un retournement du véhicule;
- un dispositif de support amovible (210, 310, 410) pour maintenir le deuxième module (5) dans sa position de repos;
- un dispositif de blocage (500, 600) au moyen duquel le deuxième module (5) peut être automatiquement supporté, dans une position différente de sa position de repos, à l'encontre d'un effort agissant en direction de la position de repos, et
- un système d'entraînement (50) comprenant un accumulateur d'énergie élastique (52) au moyen duquel le deuxième module (5) est précontraint dans sa position de repos et peut être amené en direction de sa position d'appui en cas de besoin,
**caractérisé en ce que**
les dispositifs de protection au retournement (2, 3) de deux sièges de véhicule (26, 28) d'une rangée de sièges comprennent des corps de sécurité (6) qui sont disposés directement sur ou dans le siège de véhicule (26, 28), et tous les corps de sécurité (6) sont disposés, ensemble avec leurs modules respectifs (4, 5), de manière décentrée en directions opposées par rapport au siège de véhicule (26, 28) associé et présentent un écartement mutuel afin de constituer un passage dans la région d'un renfort transversal véhiculaire.

2. Véhicule cabriolet selon la revendication 1,
**caractérisé en ce que**
le corps de sécurité (6) présente la forme d'une barre et comprend, dans son intérieur, un canal axial (8) destiné à recevoir l'accumulateur d'énergie élastique (52); et
le premier module (4) comprend, en tant que dispositifs de guidage pour le corps de sécurité (6), un profil tubulaire (30) dans lequel au moins une région d'extrémité supérieure est reçu dans la position de repos du corps de sécurité (6) et dans lequel une région d'extrémité inférieure du corps de sécurité (6) est reçu dans la position d'appui.

3. Véhicule cabriolet selon la revendication 1 ou 2,
**caractérisé en ce que**
l'on dispose une ouverture de passage (60) entre les dispositifs de protection au retournement (2, 3) de deux sièges de véhicule (26, 28).

4. Véhicule cabriolet selon la revendication 1, 2, ou 3,
**caractérisé en ce que**
le corps de sécurité (6) présente une section transversale sensiblement arrondie.

5. Véhicule cabriolet selon l'une quelconque des revendications 1 à 4,
**caractérisé en ce que**
le corps de sécurité (6) présente la forme générale d'une barre rectiligne.

6. Véhicule cabriolet selon la revendication 5,
**caractérisé en ce que**
le corps de sécurité (6) présente, à son extrémité supérieure, un profil de choc (16) avec une surface de choc (17) qui est plus grande que la section transversale du corps de sécurité (6).

7. Véhicule cabriolet selon l'une quelconque des revendications 1 à 6,
**caractérisé en ce que**
le profil tubulaire (30), qui constitue un dispositif de guidage pour le corps de sécurité (6), présente à son bord inférieur un écartement par rapport à un élément de base (34) du premier module (4).

8. Véhicule cabriolet selon la revendication 7,
**caractérisé en ce que**
le profil tubulaire (30) est raccordé à l'élément de base (34) du premier module (4) par un profil de raccord (38) qui est fixé latéralement au profil tubulaire.

9. Véhicule cabriolet selon l'une quelconque des revendications 1 à 8,
**caractérisé en ce qu'**un dispositif d'encliquetage (505, 506) du dispositif de blocage (500, 600) prend appui sur le profil tubulaire (30).

10. Véhicule cabriolet selon l'une quelconque des revendications 1 à 9,
**caractérisé en ce que**
le profil tubulaire (30) présente un évidement périphérique (31) destiné à recevoir le dispositif d'encliquetage (505) du dispositif de blocage (500), ledit dispositif d'encliquetage (505) étant maintenu sur le profil tubulaire (30) à engagement positif dans la direction de mouvement (Z) du corps de sécurité (6).

11. Véhicule cabriolet selon l'une quelconque des revendications 1 à 10,
**caractérisé en ce que**
le premier module (4) et le deuxième module (5), le dispositif de support (210, 310, 410), le dispositif de blocage (500, 600), et le système d'entraînement (50) constituent un ensemble qui est pré-monté en état de marche hors du véhicule et qui peut être monté fixe sur la carrosserie.

12. Véhicule cabriolet selon l'une quelconque des revendications 1 à 11,
**caractérisé en ce que**
les dispositifs de protection au retournement (2, 3) associés à une rangée de sièges constituent un ensemble pré-monté qui peut être monté fixe sur la carrosserie, les dispositifs de protection au retournement (2, 3) associés à une rangée de sièges étant raccordés de préférence au moyen d'une barre transversale (40).

13. Véhicule cabriolet selon l'une quelconque des revendications 1 à 12,
**caractérisé en ce qu'**un dispositif de connexion de siège (150) est intégré dans le premier module (4).

14. Véhicule cabriolet selon l'une quelconque des revendications 1 à 13,
**caractérisé en ce qu'**un système à sangle de retenue (100), qui présente des guidages pour ceinture de sécurité (110, 114) pour au moins une ceinture de sécurité (112), est intégré dans le premier module (4).

15. Véhicule cabriolet selon la revendication 14,
**caractérisé en ce que**
le système à sangle de retenue (100) comprend au moins un point d'ancrage supérieur (120, 122) pour une sangle de retenue de siège pour enfants.

16. Véhicule cabriolet selon l'une quelconque des revendications 1 à 15,
**caractérisé en ce que**
le dispositif de support amovible (210) comprend un élément de verrouillage (214) monté pivotant autour d'un axe fixe de rotation (212), ledit élément de verrouillage (214) présentant une partie en forme de cliquet (216) destinée à coopérer avec un contre-élément de verrouillage (218), qui est disposé sur le corps de sécurité (6), dans la position de repos du corps de sécurité (6),
l'élément de verrouillage (214) étant protégé en position de repos, par un élément d'arrêt (222) d'un actionneur (224), contre une rotation libérant le dispositif de support (210), et
l'élément de verrouillage (214) étant réalisé sous la forme d'un disque avec un évidement périphérique (228), dans lequel l'élément d'arrêt (222) vient en prise dans la position de repos, et avec une butée périphérique (234), contre laquelle l'élément d'arrêt (222), retiré de l'évidement (228) par l'actionneur (224) pour le transfert du corps de sécurité (6) vers sa position d'appui, s'applique après une rotation de l'élément de verrouillage (214) dégageant la partie en forme de cliquet (216) de son engagement avec le contre-élément de verrouillage (218).

17. Véhicule cabriolet selon la revendication 16,
**caractérisé en ce que**
l'élément d'arrêt (222) est linéairement déplaçable en direction axiale par l'actionneur (224), l'élément d'arrêt (222) étant en même temps précontraint à l'encontre de l'élément de verrouillage (214) au moyen d'un ressort (232).

18. Véhicule cabriolet selon l'une quelconque des revendications 16 ou 17,
**caractérisé en ce que**
l'axe de rotation (212) de l'élément de verrouillage (214) est constitué par un boulon (230) qui est monté sur des côtés opposés (240, 242) d'un élément de base (238), les côtés (240, 242) dudit élément de base (238) étant reliés entre eux par une traverse (244) constituant un siège pour l'actionneur (224).

19. Véhicule cabriolet selon l'une quelconque des revendications 16 à 18,
**caractérisé en ce que**
l'actionneur est un actionneur électromagnétique (224).

20. Véhicule cabriolet selon l'une quelconque des revendications 1 à 15,
**caractérisé en ce que**
le dispositif de support amovible (310) comprend un élément de verrouillage (314) monté pivotant autour d'un axe fixe de rotation (312), ledit élément de verrouillage (314) présentant une partie en forme de cliquet (316) destinée à coopérer avec un contre-élément de verrouillage (318), qui est disposé sur le corps de sécurité (6), dans la position de repos du corps de sécurité (6), l'élément de verrouillage (314) étant maintenu dans la position de repos par un élément fusible (348) de l'actionneur (324) qui peut être fusé en cas d'accident.

21. Véhicule cabriolet selon la revendication 20,
**caractérisé en ce que**
l'élément de verrouillage, en position de repos, est radialement poussé contre un siège qui peut être éliminé par fusion de l'élément fusible.

22. Véhicule cabriolet selon la revendication 20,
**caractérisé en ce que**
l'élément de verrouillage (314) est relié en position de repos à un élément de base (338) au moyen de l'élément fusible (348) et est en même temps chargé en direction radiale et soumis à la traction.

23. Véhicule cabriolet selon la revendication 22,
**caractérisé en ce que**
l'élément de verrouillage (314) est réalisé sous la forme d'un levier, dont une extrémité (315) constitue une partie en forme de cliquet (316) destinée à venir en prise avec le contre-élément de verrouillage (318), et un support (360) pour l'élément fusible (348), raccordé à un dispositif d'alimentation en énergie (366), est disposé dans la région de l'autre extrémité (317) du levier.

24. Véhicule cabriolet selon la revendication 23,
**caractérisé en ce que**
l'élément de verrouillage (314) comprend, dans la région de son extrémité de levier (315) en regard du corps de sécurité (6), un biais (319) qui s'étend en direction axiale, et est réalisé de manière flexible de sorte que, lors d'une réversion du déclenchement du corps de sécurité (6), l'élément de verrouillage (314) peut être fléchi par le contre-élément de verrouillage (318) du corps de sécurité (6) pendant l'abaissement de ce dernier, jusqu'à ce qu'il vienne en prise dans la partie en forme de cliquet (316).

25. Véhicule cabriolet selon l'une quelconque des revendications 1 à 15,
**caractérisé en ce que**
le dispositif de support amovible (410) présente un élément de verrouillage (414) monté pivotant autour d'un axe fixe de rotation (412), ledit élément de verrouillage (414) présentant une partie en forme de cliquet (416) destinée à coopérer avec un contre-élément de verrouillage (418), qui est disposé sur le corps de sécurité (6), lorsque le corps de sécurité (6) est en position de repos, et l'élément de verrouillage (414), en position de repos, est maintenu dans une position de butée, à partir de laquelle l'élément de verrouillage (414) peut être transfert en cas d'accident vers une position de rotation par un actionneur (424) comprenant un propulseur pyrotechnique (425).

26. Véhicule cabriolet selon l'une quelconque des revendications 1 à 25,
**caractérisé en ce que**
le dispositif de blocage (500) présente au moins un premier dispositif d'encliquetage (505), qui peut coopérer avec un deuxième dispositif d'encliquetage (506) afin de supporter le deuxième module (5) et qui permet un mouvement du deuxième module (5) à partir de sa position de repos vers sa position d'appui, ledit premier dispositif d'encliquetage (505) comprenant un cliquet d'arrêt (508) avec un profil denté (507) et ledit deuxième dispositif d'encliquetage (506) présentant une barrette d'encliquetage (509) adaptée à la géométrie du profil denté (507) du premier dispositif d'encliquetage (505), et ledit cliquet d'arrêt (508) étant soumis à une force effort élastique en direction de la barrette d'encliquetage (509).

27. Véhicule cabriolet selon l'une quelconque des revendications 1 à 25,
**caractérisé en ce que**
le dispositif de blocage (600) présente au moins un premier dispositif d'encliquetage (605), qui peut coopérer avec un deuxième dispositif d'encliquetage (606) afin de supporter le deuxième module (5) et qui permet un mouvement du deuxième module (5) à partir de sa position de repos vers sa position d'appui, un desdits dispositifs d'encliquetages (605, 606) étant reliés à un des modules (4, 5) et présentant un élément d'arrêt (608A, 608B), qui est monté rotatif de manière excentrique autour d'un axe de rotation (21) et est réalisé de manière à présenter un profil denté (607), et l'autre dispositif d'encliquetage (606) étant réalisé sous la forme d'une surface (606B) de l'autre module (5) qui se trouve en regard de l'élément d'arrêt (608A, 608B) et avec laquelle le profil denté (607) de l'élément d'arrêt (608A, 608B) est en engagement par friction dans sa position active de manière à empêcher un mouvement du deuxième module (5) vers sa position de repos à partir d'une position qui est différente de la position de repos.

28. Véhicule cabriolet selon la revendication 27,
**caractérisé en ce que**
l'élément d'arrêt (608A, 608B), quand il se trouve dans sa position active, est en engagement positif avec la surface (606B) à cause d'un état de déformation dans la région de la surface (606B) contactée qui, le cas échéant, peut être une surface profilée.

29. Véhicule cabriolet selon la revendication 27 ou 28,
**caractérisé en ce qu'un**
dispositif de ressort (609, 610), qui est associé à l'élément d'arrêt (608A, 608B) et par lequel l'élément d'arrêt (608A, 608B) est soumis à une force élastique en direction de sa position active, est pourvu d'un dispositif d'arrêt (610A) permettant, lorsque le dispositif d'arrêt (610A) est activé, de maintenir l'élément d'arrêt (608A, 608B) dans une position qui correspond à un état désactivé du premier dispositif d'encliquetage (605), ledit dispositif de ressort (609, 610) présentant de préférence un ressort en forme d'étrier en fil métallique et ledit dispositif d'arrêt (610A) présentant au moins une première zone d'étrier (610B) qui peut être relié de manière opérative à une deuxième zone d'étrier (610C) du dispositif de ressort (609, 610) pour l'activation du dispositif d'arrêt (610A).

30. Véhicule cabriolet selon la revendication 29,
**caractérisé en ce que**
le ressort en forme d'étrier en fil métallique (609, 610) est disposé de sorte que son premier bras (610D) soit disposé dans un évidement (612) de l'élément d'arrêt (608A, 608B) et que son deuxième bras (610E) vienne s'appliquer contre un module (4) monté fixe sur la carrosserie, le dispositif de ressort (609, 610) se trouvant ainsi dans une position précontrainte qui fait pivoter le cliquet d'arrêt (608A, 608B), lorsque le dispositif d'arrêt (610A) est désactivé, autour du boulon de palier (611) vers une position qui correspond à l'état activé du premier dispositif d'encliquetage (5).

31. Véhicule cabriolet selon l'une quelconque des revendications 27 à 30,
**caractérisé en ce que**
le premier dispositif d'encliquetage (605) avec l'élément d'arrêt (608A, 608B) est disposé sur le premier module (4) monté fixe sur la carrosserie, et le deuxième dispositif d'encliquetage (606) est disposé sur le deuxième module (5) déployable.
